# EUROPEAN PATENT APPLICATION

(11) **EP 4 510 741 A1**
(43) Date of publication of application: **19.02.2025**
(21) Application number: 22936877.4
(22) Date of filing: 13.04.2022
(51) Int. Cl.: H04W 72/12

(54) **UPLINK TRANSMISSION METHOD/APPARATUS/DEVICE AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Dehns Germany Partnerschaft mbB
(86) International application number: PCT/CN2022/086721
(87) International publication number: WO 2023/197227

(57) **Abstract**

Provided in the present disclosure are an uplink transmission method/apparatus/device/storage medium, belonging to the technical field of communications. A UE determines an uplink transmission discard configuration, wherein the uplink transmission discard configuration comprises at least one of a time length and maximum allowable discard information corresponding to the time length, the time length being used for determining a time interval to which the UE belongs, and the maximum allowable discard information being used for determining whether the UE allows uplink discard within the time interval; and, when needing to perform uplink discard, the UE performs uplink discard on the basis of the uplink transmission discard configuration. Therefore, provided in the embodiments of the present disclosure is the uplink transmission method, which is used for uplink discard of a UE, thus meeting the anti-interference requirement of the UE and ensuring the transmission stability.

## Description

### TECHNICAL FIELD

The present disclosure relates to the field of communications technology, in particular to an uplink transmission method/apparatus/device and a storage medium.

### BACKGROUND

In a 5G NR system, due to different network and service requirements, the same UE (User Equipment) may be equipped with various different wireless transceivers such as LTE (Long Term Evolution), 5G, a WIFI (hot spot), a Bluetooth, and a GNSS (Global Navigation Satellite System). In the part of adjacent frequencies or harmonic frequencies, a receiver of the UE may be interfered by a transmitter. For example, the receiver is interfered by the same or different RATs (Radio Access Technologies). In order to solve the problem of interference, it is required to perform uplink discard.

However, in the related art, a network device may configure different SCSs (Sub-carrier Spaces) for different carriers/BWPs (Bandwidth Parts) of the same UE, while the different SCSs may correspond to different time domain resource allocation granularities. Based on the different SCSs corresponding to the different time domain resource allocation granularities, the understanding of the UE and the network device for configuration information for uplink discard may be inconsistent (for example, the understanding of the UE and the network device for time information in the configuration information may be inconsistent), which may lead to inaccurate uplink discard, and then affect the anti-interference requirement of the UE.

### SUMMARY

An uplink transmission method/apparatus/device and a storage medium provided in the present disclosure are used for uplink discard of a UE.

A method provided in an embodiment in one aspect of the present disclosure is applied to a UE, and includes:
determining an uplink transmission discard configuration, the uplink transmission discard configuration including at least one of a time length and maximum allowable discard information corresponding to the time length; wherein the time length is used for determining a time interval to which the UE belongs, and the maximum allowable discard information is used for determining whether the UE is allowed to perform uplink discard within the time interval; and
in response to needing to perform uplink discard, performing the uplink discard based on the uplink transmission discard configuration.

In some examples, in an embodiment of the present disclosure, the time length includes at least one of:
an absolute time length; or
a relative time length;
in some examples, in an embodiment of the present disclosure, the relative time length includes at least one of:
   a number of system frames;
   a number of subframes;
   a number of slots; or
   a number of symbols.

In some examples, in an embodiment of the present disclosure, the maximum allowable discard information includes at least one of:
transmission time of maximum allowable discard; or
a transmission number of the maximum allowable discard.

In some examples, in an embodiment of the present disclosure, the transmission time of the maximum allowable discard includes at least one of:
absolute time of the maximum allowable discard, a length of the absolute time of the maximum allowable discard being less than or equal to the absolute time length; or
relative time of the maximum allowable discard, a length of the relative time of the maximum allowable discard being less than or equal to the relative time length;
in some examples, in an embodiment of the present disclosure, the relative time of the maximum allowable discard includes at least one of:
   a number of system frames of the maximum allowable discard;
   a number of subframes of the maximum allowable discard;
   a number of slots of the maximum allowable discard; or
   a number of symbols of the maximum allowable discard.

In some examples, in an embodiment of the present disclosure, the performing the uplink discard based on the uplink transmission discard configuration includes:
determining first time according to the time length and current time, wherein a time interval between the first time and the current time is the time length;
determining the time interval between the first time and the current time as the time interval to which the UE belongs;
counting at least one of historical uplink discard time or a historical uplink discard number within the time interval to which the UE belongs, the historical uplink discard time including at least one of absolute time of historical uplink discard or relative time of historical uplink discard; and
in response to at least one of the historical uplink discard time being less than or equal to the transmission time of the maximum allowable discard, or the historical uplink discard number being less than or equal to the transmission number of the maximum allowable discard, determining that uplink discard is allowed to be performed, or else, determining that uplink discard is not allowed to be performed.

In some examples, in an embodiment of the present disclosure, the performing the uplink discard based on the uplink transmission discard configuration includes:
obtaining at least one time interval by sequentially dividing a time domain resource for uplink transmission based on the time length, wherein a length of one time interval is equal to or less than the time length;
determining a time interval to which a time-frequency domain resource corresponding to current time belongs as the time interval to which the UE belongs;
counting historical uplink discard time and/or a historical uplink discard number within the time interval to which the UE belongs, the historical uplink discard time including at least one of absolute time of historical uplink discard or relative time of historical uplink discard; and
in response to at least one of the historical uplink discard time being less than or equal to the transmission time of the maximum allowable discard, or the historical uplink discard number being less than or equal to the transmission number of the maximum allowable discard, determining that uplink discard is allowed to be performed, or else, determining that uplink discard is not allowed to be performed.

In some examples, in an embodiment of the present disclosure, the method further includes:
determining indication information based on at least one of a configuration of a network device or an agreement in a protocol, the indication information being used for indicating an uplink discard type to which the uplink transmission discard configuration is applicable and/or inapplicable.

In some examples, in an embodiment of the present disclosure, the indication information is used for indicating at least one of
the uplink transmission discard configuration is applicable to all uplink discard types;
the uplink transmission discard configuration is applicable to a first uplink discard type, the first uplink discard type including uplink discard that a UE spontaneously discards uplink transmission due to interference;
the uplink transmission discard configuration is applicable to a second uplink discard type, the second uplink discard type including uplink discard that a UE spontaneously discards uplink transmission due toa limited capacity of the UE;
the uplink transmission discard configuration is inapplicable to a third uplink discard type, the third uplink discard type including at least one of:
uplink discard due to that uplink processing time is less than a time threshold between current time and actual uplink transmission time;
uplink discard due to that an uplink sending delay is greater than a threshold value;
uplink discard due to that a reserved uplink resource has no sending demand; or
uplink discard due to an uplink transmission conflict.

In some examples, in an embodiment of the present disclosure, the counting historical uplink discard time and/or a historical uplink discard number includes:
counting historical discard time and/or a historical discard number of uplink discard to which the uplink transmission discard configuration is applicable, as the historical uplink discard time and/or the historical uplink discard number; or
counting historical discard time and/or a historical discard number of uplink discard other than uplink discard to which the uplink transmission discard configuration is inapplicable, as the historical uplink discard time and/or the historical uplink discard number.

In some examples, in an embodiment of the present disclosure, a method for determining the uplink transmission discard configuration includes at least one of:
obtaining the uplink transmission discard configuration sent by a network device; or
determining the uplink transmission discard configuration based on an agreement of a protocol.

In some examples, in an embodiment of the present disclosure, the method further includes:
determining, based on a configuration of a network device and/or an agreement of a protocol, first frequency information of an applicable frequency of the uplink transmission discard configuration.

In some examples, in an embodiment of the present disclosure, the first frequency information includes at least one of:
all service frequencies configured by the UE;
one or more service frequencies activated to be used among all the service frequencies configured by the UE; or
second frequency information indicating a specified frequency;
in some examples, in an embodiment of the present disclosure, the second frequency information includes at least one of:
   a cell type indication of the specified frequency;
   a cell group indication of the specified frequency;
   a cell identifier of the specified frequency;
   a bandwidth part (BWP) identifier of the specified frequency;
   a frequency point identifier of the specified frequency;
   a bandwidth of the specified frequency;
   starting frequency information of the specified frequency; or
   ending frequency information of the specified frequency.

In some examples, in an embodiment of the present disclosure, the performing the uplink discard based on the uplink transmission discard configuration includes:
in response to a frequency corresponding to current uplink transmission is the applicable frequency of the uplink transmission discard configuration, performing the uplink discard based on the uplink transmission discard configuration.

In some examples, in an embodiment of the present disclosure, the method further includes:
in response to the time length including the relative time length, determining, based on at least one of a configuration of a network device or an agreement of a protocol, reference time information to which the relative time length is applicable; the reference time information being used for indicating reference time applicable to the relative time length;
wherein the reference time information includes at least one of:
an Sub-Carrier Space (SCS) applicable to the relative time length;
a Cyclic Prefix (CP) type applicable to the relative time length;
a cell type indication applicable to the relative time length;
a cell group indication applicable to the relative time length;
a cell identifier applicable to the relative time length; or
a BWP identifier applicable to the relative time length.

In some examples, in an embodiment of the present disclosure, the performing the uplink discard based on the uplink transmission discard configuration includes:
determining, based on the reference time information, whether reference time corresponding to current uplink transmission is the same as the reference time applicable to the relative time length;
in response to the reference time corresponding to the current uplink transmission being the same as the reference time applicable to the relative time length, performing uplink discard based on the uplink transmission discard configuration in which the applicable reference time is the same as the reference time corresponding to the current uplink transmission; and
in response to the reference time corresponding to the current uplink transmission being different from the reference time applicable to the relative time length, not performing uplink discard, or performing a conversion operation on the uplink transmission discard configuration, and performing uplink discard based on the converted uplink transmission discard configuration.

In some examples, in an embodiment of the present disclosure, the conversion operation includes at least one as follows:
performing a first operation to convert the relative time length in the uplink transmission discard configuration into a relative time length applicable to the reference time corresponding to the current uplink transmission, the first operation including: converting the relative time length in the uplink transmission discard configuration into an absolute time length, and converting the converted absolute time length into a relative time length applicable to the reference time corresponding to the current uplink transmission;
performing a second operation to convert the relative time of the maximum allowable discard in the uplink transmission discard configuration into relative time of maximum allowable discard applicable to the reference time corresponding to the current uplink transmission, the second operation including: converting the relative time of the maximum allowable discard in the uplink transmission discard configuration into an absolute time length, and converting the converted absolute time length into the relative time of the maximum allowable discard applicable to the reference time corresponding to the current uplink transmission;
performing a first operation to convert the relative time length in the uplink transmission discard configuration into the relative time length applicable to the reference time corresponding to the current uplink transmission, and performing a second operation to convert the relative time of the maximum allowable discard in the uplink transmission discard configuration into the relative time of the maximum allowable discard applicable to the reference time corresponding to the current uplink transmission;
performing a third operation on the uplink transmission discard configuration to obtain a converted uplink transmission discard configuration, the third operation satisfying: a maximum allowable discard rate of the converted uplink transmission discard configuration is the same as the maximum allowable discard rate of the unconverted uplink transmission discard configuration;
performing a fourth operation on the uplink transmission discard configuration to obtain a converted uplink transmission discard configuration, the fourth operation satisfying: the maximum allowable discard rate of the converted uplink transmission discard configuration is an integral value closest to the maximum allowable discard rate of the unconverted uplink transmission discard configuration;
performing a fifth operation on the uplink transmission discard configuration to obtain a converted uplink transmission discard configuration, the fifth operation satisfying: the maximum allowable discard rate of the converted uplink transmission discard configuration is less than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration; or
performing a sixth operation on the uplink transmission discard configuration to obtain a converted uplink transmission discard configuration, the sixth operation satisfying: the maximum allowable discard rate of the converted uplink transmission discard configuration is greater than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration.

In some examples, in an embodiment of the present disclosure, the maximum allowable discard rate = transmission time of the maximum allowable discard / the time length; or
the maximum allowable discard rate = a transmission number of the maximum allowable discard / the time length; or
the maximum allowable discard rate = the transmission number of the maximum allowable discard / a total transmission number within the time length.

A method provided in an embodiment in another aspect of the present disclosure is applied to a network device, and includes:
sending an uplink transmission discard configuration to a UE, the uplink transmission discard configuration including at least one of a time length or maximum allowable discard information corresponding to the time length; wherein the time length is used for determining a time interval to which the UE belongs, and the maximum allowable discard information is used for determining whether the UE is allowed to perform uplink discard within the time interval.

In some examples, in an embodiment of the present disclosure, the time length includes at least one of:
an absolute time length; or
a relative time length;

In some examples, in an embodiment of the present disclosure, the relative time length includes at least one of:
a number of system frames;
a number of subframes;
a number of slots; or
a number of symbols.

In some examples, in an embodiment of the present disclosure, the maximum allowable discard information includes at least one of:
transmission time of maximum allowable discard; or
a transmission number of the maximum allowable discard.

In some examples, in an embodiment of the present disclosure, the transmission time of the maximum allowable discard includes at least one of:
absolute time of the maximum allowable discard, a length of the absolute time of the maximum allowable discard being less than or equal to the absolute time length; and
relative time of the maximum allowable discard, a length of the relative time of the maximum allowable discard being less than or equal to the relative time length;
wherein the relative time of the maximum allowable discard includes at least one of:
a number of system frames of the maximum allowable discard;
a number of subframes of the maximum allowable discard;
a number of slots of the maximum allowable discard; or
a number of symbols of the maximum allowable discard.

In some examples, in an embodiment of the present disclosure, the method further includes:
configuring indication information to the UE, the indication information being used for indicating an uplink discard type to which the uplink transmission discard configuration is applicable or inapplicable.

In some examples, in an embodiment of the present disclosure, the indication information is used for indicating at least one of:
the uplink transmission discard configuration is applicable to all uplink discard types;
the uplink transmission discard configuration is applicable to a first uplink discard type, the first uplink discard type including uplink discard that a UE spontaneously discards uplink transmission due to interference;
the uplink transmission discard configuration is applicable to a second uplink discard type, the second uplink discard type including uplink discard that a UE spontaneously discards uplink transmission due to a limited capacity of the UE;
the uplink transmission discard configuration is inapplicable to a third uplink discard type, the third uplink discard type including at least one of:
uplink discard due to that uplink processing time is less than a time threshold between current time and actual uplink transmission time;
uplink discard due to that an uplink sending delay is greater than a threshold value;
uplink discard due to that a reserved uplink resource has no sending demand; or
uplink discard due to an uplink transmission conflict.

In some examples, in an embodiment of the present disclosure, the method further includes:
configuring first frequency information of an applicable frequency of the uplink transmission discard configuration to the UE.

In some examples, in an embodiment of the present disclosure, the first frequency information includes at least one of:
all service frequencies configured by the UE;
one or more service frequencies activated to be used among all the service frequencies configured by the UE; or
second frequency information indicating a specified frequency;
wherein the second frequency information includes at least one of:
a cell type indication of the specified frequency;
a cell group indication of the specified frequency;
a cell identifier of the specified frequency;
a BWP identifier of the specified frequency;
a frequency point identifier of the specified frequency;
a bandwidth of the specified frequency;
starting frequency information of the specified frequency; or
ending frequency information of the specified frequency.

In some examples, in an embodiment of the present disclosure, the method further includes:
in response to the time length including the relative time length, configuring reference time information to which the relative time length is applicable to the UE; the reference time information being used for indicating reference time applicable to the relative time length;
wherein the reference time information includes at least one of:
a Sub-Carrier Space (SCS) of an applicable frequency of the relative time length;
a CP type of an applicable frequency of the relative time length;
a cell type indication of an applicable frequency of the relative time length;
a cell group indication of an applicable frequency of the relative time length;
a cell identifier of an applicable frequency of the relative time length; or
a BWP identifier of an applicable frequency of the relative time length.

An uplink transmission apparatus provided in an embodiment in another aspect of the present disclosure includes:
a determination module configured to determine an uplink transmission discard configuration, the uplink transmission discard configuration including at least one of a time length or maximum allowable discard information corresponding to the time length; wherein the time length is used for determining a time interval to which the UE belongs, and the maximum allowable discard information is used for determining whether the UE is allowed to perform uplink discard within the time interval; and
an uplink discard module configured to, in response to needing to perform uplink discard, perform uplink discard based on the uplink transmission discard configuration.

An uplink transmission apparatus provided in an embodiment in another aspect of the present disclosure includes:
a sending module configured to send an uplink transmission discard configuration to a UE, the uplink transmission discard configuration including at least one of a time length or maximum allowable discard information corresponding to the time length; wherein the time length is used for determining a time interval to which the UE belongs, and the maximum allowable discard information is used for determining whether the UE is allowed to perform uplink discard within the time interval.

A communication apparatus provided in an embodiment in another aspect of the present disclosure includes a processor and a memory, wherein the memory stores a computer program, and the processor executes the computer program stored in the memory to cause the apparatus to perform the method provided in the embodiment in one aspect as mentioned above.

A communication apparatus provided in an embodiment in another aspect of the present disclosure includes a processor and a memory, wherein the memory stores a computer program, and the processor executes the computer program stored in the memory to cause the apparatus to perform the method provided in the embodiment in the other aspect as mentioned above.

A communication apparatus provided in an embodiment in another aspect of the present disclosure includes a processor and an interface circuit, wherein
the interface circuit is configured to receive code instructions and transmit the code instructions to the processor; and
the processor is configured to run the code instructions so as to perform the method provided in the embodiment in one aspect as mentioned above.

A communication apparatus provided in an embodiment in another aspect of the present disclosure includes a processor and an interface circuit, wherein
the interface circuit is configured to receive code instructions and transmit the code instructions to the processor; and
the processor is configured to run the code instructions so as to perform the method provided in the embodiment in the other aspect as mentioned above.

A computer-readable storage medium provided in an embodiment in another aspect of the present disclosure is configured to store instructions which, when executed, enable the method provided in the embodiment in one aspect to be implemented.

A computer-readable storage medium provided in an embodiment in another aspect of the present disclosure is configured to store instructions which, when executed, enable the method provided in the embodiment in the other aspect to be implemented.

In conclusion, in the uplink transmission method/apparatus/device/ and the storage medium provided in the embodiments of the present disclosure, a UE may determine an uplink transmission discard configuration, and when needing to perform uplink discard, the UE performs uplink discard based on the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

### BRIEF DESCRIPTION OF DRAWINGS

The above-mentioned and/or additional aspects and advantages of the present disclosure will become obvious and easy to understand in the following description for embodiments in conjunction with the accompanying drawings, in which:
Fig. 1 is a schematic flow diagram of an uplink transmission method provided in an embodiment of the present disclosure.
Fig. 2 is a schematic flow diagram of an uplink transmission method provided in another embodiment of the present disclosure.
Fig. 3 is a schematic flow diagram of an uplink transmission method provided in another embodiment of the present disclosure.
Fig. 4 is a schematic flow diagram of an uplink transmission method provided in another embodiment of the present disclosure.
Fig. 5 is a schematic flow diagram of an uplink transmission method provided in another embodiment of the present disclosure.
Fig. 6 is a schematic flow diagram of an uplink transmission method provided in another embodiment of the present disclosure.
Fig. 7 is a schematic flow diagram of an uplink transmission method provided in another embodiment of the present disclosure.
Fig. 8 is a schematic flow diagram of an uplink transmission method provided in another embodiment of the present disclosure.
Fig. 9 is a schematic flow diagram of an uplink transmission method provided in another embodiment of the present disclosure.
Fig. 10 is a schematic flow diagram of an uplink transmission method provided in another embodiment of the present disclosure.
Fig. 11 is a schematic flow diagram of an uplink transmission method provided in another embodiment of the present disclosure.
Fig. 12 is a schematic structural diagram of an uplink transmission apparatus provided in an embodiment of the present disclosure.
Fig. 13 is a schematic structural diagram of an uplink transmission apparatus provided in another embodiment of the present disclosure.
Fig. 14 is a block diagram of a user equipment provided in an embodiment of the present disclosure.
Fig. 15 is a block diagram of a network side device provided in an embodiment of the present disclosure.

### DETAILED DESCRIPTION

Exemplary embodiments will be described in detail herein, examples thereof are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with the embodiments of the present disclosure. On the contrary, they are only examples of apparatuses and methods consistent with some aspects of the embodiments of the present disclosure as detailed in the appended claims.

Terms used in the embodiments of the present disclosure are only intended to describe specific embodiments, rather than to limit the embodiments of the present disclosure. "A" and "the" in a singular form used in the embodiments and appended claims of the present disclosure are also intended to include a plural form unless other meanings are explicitly indicated in the context otherwise. It should be further understood that term "and/or" used herein refers to and includes any or all possible combinations of one or more listed relevant items.

It should be understood that terms such as first, second and third may be adopted in the embodiments of the present disclosure to describe various information, but the information should not be limited to these terms. These terms are used only for distinguishing the same type of information from each other. For example, first information may also be referred to as second information, and similarly, the second information may also be referred to as the first information without departing from the scope of the embodiments of the present disclosure, which depends on a context, for example, the word "if' and "in case" used herein can be explained as "while" or "when" or "determine... in response to".

An uplink transmission method/apparatus/device and a storage medium provided in embodiments of the present disclosure will be described in detail below with reference to the accompanying drawings.

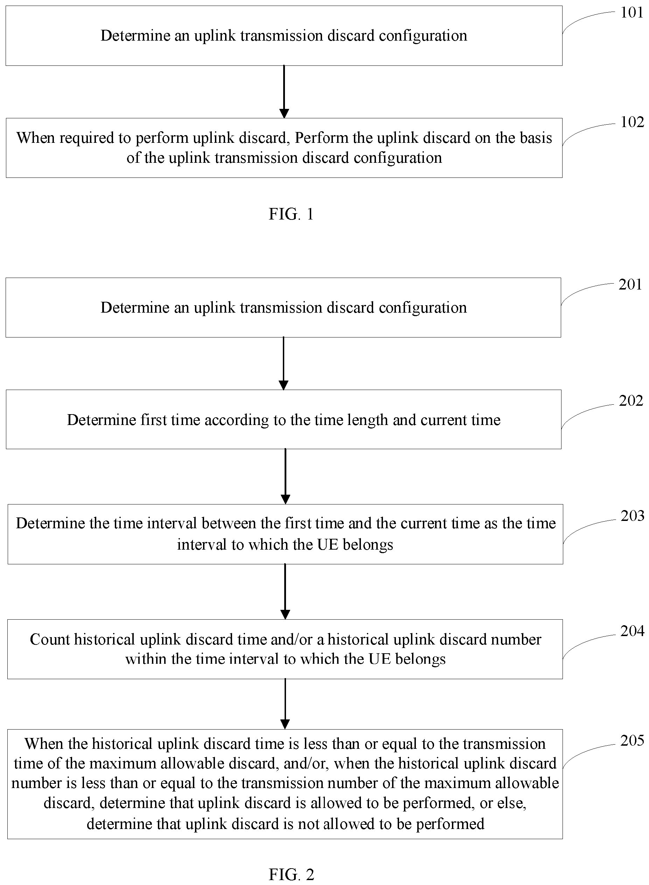

Fig. 1 is a schematic flow diagram of an uplink transmission method provided in an embodiment of the present disclosure, and the method is performed by a UE. As shown in Fig. 1, the uplink transmission method may include the following steps.

Step 101: an uplink transmission discard configuration is determined.

It should be noted that, in an embodiment of the present disclosure, the UE may refer to a device providing voice and/or data connectivity to a user. The terminal device may communicate with one or more core networks through an RAN (Radio Access Network), and the UE may be an Internet of Things terminal, such as a sensor device, a mobile phone (or referred to as "cellular" phone), and a computer with the Internet of Things terminal, such as a fixed, portable, compact, handheld, computer built-in or vehicle-counted apparatus. For example, it may be a Station (STA), a subscriber unit, a subscriber station, a mobile station, a mobile, a remote station, an access point, a remote terminal, an access terminal, a user apparatus (user terminal), or a user agent. Or, the UE may also be a device of an unmanned aerial vehicle. Or, the UE may also be a vehicle-mounted device, such as a driving computer with a wireless communication function or a wireless terminal externally connected to the driving computer. Or, the UE may also be a roadside device, such as a street lamp, a signal lamp or other roadside devices with a wireless communication function.

In an embodiment of the present disclosure, the above-mentioned uplink transmission discard configuration may include at least one of a time length and maximum allowable discard information corresponding to the time length. In an embodiment of the present disclosure, the time length may be used for determining a time interval to which the UE belongs, and the maximum allowable discard information may be used for determining whether the UE is allowed to perform uplink discard within the time interval. Specifically, the maximum allowable discard information may be mainly used for: when the UE needs to perform uplink discard within the time interval to which the UE belongs, determining, on the basis of the maximum allowable discard information, whether the uplink discard is allowed to be performed.

Further, in an embodiment of the present disclosure, the above-mentioned time length may include at least one of:
an absolute time length; or
a relative time length.

In an embodiment of the present disclosure, the absolute time length may be specifically a time length timed with a conventional time unit (such as hour, minute, and second), wherein the absolute time length may be, for example, 200 ms (millisecond).

In an embodiment of the present disclosure, the above-mentioned relative time length may include at least one of:
the number of system frames (for example, the number of SFNs (System Frame Numbers) is 2);
the number of subframes (for example, the number of subframes is 2);
the number of slots (for example, the number of slots is 5); or
the number of symbols (for example, the number of OFDM (Orthogonal Frequency Division Multiplex) symbols is 2).

It should be noted that, in an embodiment of the present disclosure, if the above-mentioned time length includes a plurality of terms, the time length may be a sum of all the terms. Illustratively, in an embodiment of the present disclosure, it is supposed that the time length includes the relative time length, and the relative time length includes 2 system frames, 5 slots and 2 OFDM symbols, based on this, the time length determined by the UE = 2 system frames+5 slots+2 OFDM symbols.

Further, in an embodiment of the present disclosure, the above-mentioned maximum allowable discard information may include at least one of:
transmission time of maximum allowable discard; or
a transmission number of maximum allowable discard.

Specifically, in an embodiment of the present disclosure, the above-mentioned transmission time of the maximum allowable discard may include at least one of:
absolute time (such as 100 ms) of the maximum allowable discard, a length of the absolute time of the maximum allowable discard being less than or equal to the absolute time length; or
relative time of the maximum allowable discard, a length of the relative time of the maximum allowable discard being less than or equal to the relative time length;
wherein in an embodiment of the present disclosure, the relative time of the maximum allowable discard may include at least one of:
the number of system frames of the maximum allowable discard (for example, the number of SFNs is 2);
the number of subframes of the maximum allowable discard (for example, the number of subframes is 2);
the number of slots of the maximum allowable discard (for example, the number of slots is 5); or
the number of symbols of the maximum allowable discard (for example, the number of OFDM symbols is 2).

In an embodiment of the present disclosure, if the above-mentioned transmission time of the maximum allowable discard includes a plurality of items, the transmission time of the maximum allowable discard is a sum of all the items. For example, in an embodiment of the present disclosure, it is supposed that the transmission time of the maximum allowable discard includes the relative time of the maximum allowable discard, and the relative time of the maximum allowable discard includes 2 system frames maximum allowable to be discarded, 5 slots maximum allowable to be discarded and 2 symbols maximum allowable to be discarded, based on this, the transmission time of the maximum allowable discard determined by the UE = 2 system frames+5 slots+2 symbols.

Further, in an embodiment of the present disclosure, the method that the UE determines the uplink transmission discard configuration may include at least one of:
obtaining the uplink transmission discard configuration sent by a network device; or
determining the uplink transmission discard configuration based on an agreement of a protocol.

Step 102: when it is required to perform uplink discard, the uplink discard is performed on the basis of the uplink transmission discard configuration.

In an embodiment of the present disclosure, the above-mentioned method that uplink discard is performed on the basis of the uplink transmission discard configuration may include: when it is determined by the UE that uplink discard needs to be performed, the time interval to which the UE belongs is determined on the basis of the time length in the uplink transmission discard configuration, and historical uplink discard time and/or a historical uplink discard number is counted within the time interval to which the UE belongs. Wherein when the historical uplink discard time is less than or equal to the transmission time of the maximum allowable discard in the maximum allowable discard information, and/or, when the historical uplink discard number is less than or equal to the transmission number of the maximum allowable discard in the maximum allowable discard information, it is determined that uplink discard that needs to be performed this time is allowed to be performed. Or else, it is determined that uplink discard that needs to be performed this time is not allowed to be performed.

Related introduction for the above-mentioned "the time interval to which the UE belongs is determined on the basis of the time length in the uplink transmission discard configuration" and "historical uplink discard time and/or a historical uplink discard number is counted within the time interval to which the UE belongs" will be described in detail in the subsequent embodiments.

In conclusion, in the uplink transmission method provided in the embodiment of the present disclosure, a UE may determine an uplink transmission discard configuration, and when needing to perform uplink discard, the UE performs the uplink discard on the basis of the uplink transmission discard configuration, where the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

Fig. 2 is a schematic flow diagram of an uplink transmission method provided in an embodiment of the present disclosure, and the method is performed by a UE. As shown in Fig. 2, the uplink transmission method may include the following steps.

Step 201: an uplink transmission discard configuration is determined.

In an embodiment of the present disclosure, the above-mentioned uplink transmission discard configuration may include at least one of a time length or maximum allowable discard information corresponding to the time length. In an embodiment of the present disclosure, the time length may be used for determining a time interval to which the UE belongs, and the maximum allowable discard information may be used for determining whether the UE is allowed to perform uplink discard within the time interval. Specifically, the maximum allowable discard information may be mainly used for: when the UE needs to perform uplink discard within the time interval to which the UE belongs, determining, on the basis of the maximum allowable discard information, whether the uplink discard is allowed to be performed.

Detailed introduction for step 201 may refer to the related introduction in the above-mentioned embodiment, repeated descriptions thereof will be omitted herein in the embodiment of the present disclosure.

Step 202: a first time is determined according to the time length and current time.

In an embodiment of the present disclosure, the method that the first time is determined according to the time length and the current time may include: a backward calculation is performed from the current time on the basis of the time length to obtain the first time.

In an embodiment of the present disclosure, a time interval between the first time and the current time of the UE is the above-mentioned time length.

Illustratively, in an embodiment of the present disclosure, it is supposed that the time length in the uplink transmission discard configuration determined in the above-mentioned step 201 includes the relative time length and the relative time length is 200 slots, and it is supposed that the current time of the UE is slot-1, 200 slots are backwards calculated from slot-1 to obtain a slot (such as slot-n) determined as the first time.

Step 203, the time interval between the first time and the current time is determined as the time interval to which the UE belongs.

It should be noted that, in an embodiment of the present disclosure, the time interval to which the UE belongs may be specifically at least one of an absolute time interval or a relative time interval.

Specifically, in an embodiment of the present disclosure, when the time length in the uplink transmission discard configuration in the above-mentioned step 201 includes the absolute time length (such as 200 ms), the determined time interval to which the UE belongs may be an absolute time interval (such as a time interval within 200 ms before the current time); and when the time length in the uplink transmission discard configuration in the above-mentioned step 201 includes the relative time length, the determined time interval to which the UE belongs may be a relative time interval. Illustratively, in an embodiment of the present disclosure, the time interval to which the UE belongs may be, for example, a time interval from the first time slot-n determined in the above-mentioned step 202 to the current time slot-1 of the UE.

Step 204, at least one of historical uplink discard time and/or a historical uplink discard number is counted within the time interval to which the UE belongs.

In an embodiment of the present disclosure, the historical uplink discard time may include at least one of an absolute time of historical uplink discard or a relative time of historical uplink discard.

Illustratively, in an embodiment of the present disclosure, the absolute time of historical uplink discard may be, for example, absolute time taken by historical uplink discard (for example, the historical uplink discard took 100 ms). In another embodiment of the present disclosure, the relative time of historical uplink discard may be, for example, relative time taken by historical uplink discard (for example, the historical uplink discard took 2 slots).

Step 205, when the historical uplink discard time is less than or equal to the transmission time of the maximum allowable discard, and/or, when the historical uplink discard number is less than or equal to the transmission number of the maximum allowable discard, it is determined that uplink discard is allowed to be performed, or else, it is determined that uplink discard is not allowed to be performed.

In an embodiment of the present disclosure, the above-mentioned "the historical uplink discard time is less than or equal to the transmission time of the maximum allowable discard" may be understood as at least one of "the absolute time of historical uplink discard is less than or equal to the absolute time of the maximum allowable discard", "the absolute time of historical uplink discard is less than or equal to the relative time of the maximum allowable discard", "the relative time of historical uplink discard is less than or equal to the absolute time of the maximum allowable discard", or "the relative time of historical uplink discard is less than or equal to the relative time of the maximum allowable discard".

In an embodiment of the present disclosure, when the historical uplink discard time is less than or equal to the transmission time of the maximum allowable discard, it shows that the uplink discard time of the UE within the time interval to which the UE belongs has not reached the transmission time of the maximum allowable discard at the moment. Therefore, it is determined that the UE is allowed to perform uplink discard to ensure that the anti-interference requirement of the UE can be met.

Illustratively, in an embodiment of the present disclosure, it is supposed that the transmission time of the maximum allowable discard is 20 slots, and the historical uplink discard time counted by the UE within the time interval to which the UE belongs is 18 slots, it is determined that the UE is allowed to perform uplink discard.

In another embodiment of the present disclosure, when the historical uplink discard time is less than or equal to the transmission number of the maximum allowable discard, it shows that the uplink discard number of the UE within the time interval to which the UE belongs has not reached the transmission number of the maximum allowable discard at the moment. Therefore, it is determined that the UE is allowed to perform uplink discard to ensure that the anti-interference requirement of the UE can be met.

For example, in an embodiment of the present disclosure, it is supposed that the transmission number of the maximum allowable discard is 20 times, and the historical uplink discard number counted by the UE within the time interval to which the UE belongs is 18 times, it is determined that the UE is allowed to perform uplink discard.

In conclusion, in the uplink transmission method provided in the embodiments of the present disclosure, a UE may determine an uplink transmission discard configuration, and when needing to perform uplink discard, the UE performs the uplink discard on the basis of the uplink transmission discard configuration, where the uplink transmission discard configuration includes at least one of a time length or maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

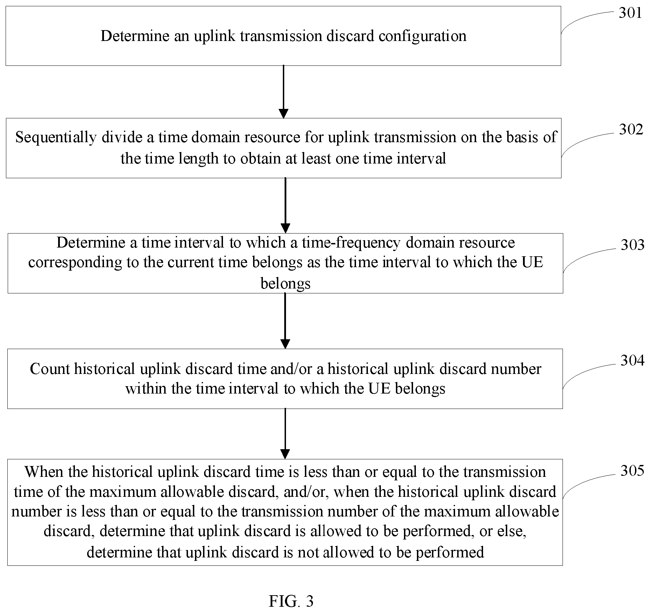

Fig. 3 is a schematic flow diagram of an uplink transmission method provided in an embodiment of the present disclosure, and the method is performed by a UE. As shown in Fig. 3, the uplink transmission method may include the following steps.

Step 301: an uplink transmission discard configuration is determined.

In an embodiment of the present disclosure, the above-mentioned uplink transmission discard configuration may include at least one of a time length or maximum allowable discard information corresponding to the time length. In an embodiment of the present disclosure, the time length may be used for determining a time interval to which the UE belongs, and the maximum allowable discard information may be used for determining whether the UE is allowed to perform uplink discard within the time interval. Specifically, the maximum allowable discard information may be mainly used for: when the UE needs to perform uplink discard within the time interval to which the UE belongs, determining, on the basis of the maximum allowable discard information, whether the uplink discard is allowed to be performed.

Detailed introduction for step 301 may refer to the related introduction in the above-mentioned embodiments, repeated descriptions thereof will be omitted herein in the embodiment of the present disclosure.

Step 302: a time domain resource for uplink transmission is sequentially divided on the basis of the time length to obtain at least one time interval.

In an embodiment of the present disclosure, a length of one time interval is equal to or less than the time length in the above-mentioned uplink transmission discard configuration. Specifically, in an embodiment of the present disclosure, the length of the last time interval may be less than or equal to the time length, and lengths of other time intervals may be all equal to the time length.

Illustratively, in an embodiment of the present disclosure, it is supposed that the time length in the uplink transmission discard configuration determined in the above-mentioned step 301 includes a relative time length and the relative time length is 200 slots, and it is supposed that a starting position of the time domain resource for uplink transmission of the UE is expressed as SFN=0, slot=0, when the step 302 is performed, division may be sequentially started from SFN=0, slot=0 according to a period of 200 slots to obtain at least one time interval. For example, it is supposed that the SCS currently corresponding to the UE is 240 KHz (kilohertz) and the time domain resource for uplink transmission of the UE includes two SFNs, then SFN=0, slot=0 to SFN=1, slot=39 may be obtained as a first time interval, and SFN=1, slot=40 to SFN=1, slot=159 may be obtained as a second time interval.

Step 303: a time interval to which a time-frequency domain resource corresponding to the current time belongs is determined as the time interval to which the UE belongs.

Specifically, in an embodiment of the present disclosure, the time interval to which the time-frequency domain resource corresponding to the current time belongs may be determined as the time interval to which the UE belongs.

Illustratively, in an embodiment of the present disclosure, it is supposed that the time domain resource currently corresponding to the UE is SFN=1, slot=20, it can be determined that the time interval to which the UE belongs is the first time interval in the above-mentioned step 302.

Step 304: at least one of a historical uplink discard time and/or a historical uplink discard number is counted within the time interval to which the UE belongs.

In an embodiment of the present disclosure, the historical uplink discard time may include at least one of absolute time of historical uplink discard or relative time of historical uplink discard.

Illustratively, in an embodiment of the present disclosure, the absolute time of historical uplink discard may be, for example, absolute time taken by historical uplink discard (for example, the historical uplink discard took 100 ms). In another embodiment of the present disclosure, the relative time of historical uplink discard may be, for example, relative time taken by historical uplink discard (for example, the historical uplink discard took 2 slots).

Step 305: when the historical uplink discard time is less than or equal to the transmission time of the maximum allowable discard, and/or, when the historical uplink discard number is less than or equal to the transmission number of the maximum allowable discard, it is determined that uplink discard is allowed to be performed, or else, it is determined that uplink discard is not allowed to be performed.

In an embodiment of the present disclosure, detailed introduction for step 304 to step 305 may refer to the related introduction in the above-mentioned embodiments, repeated descriptions thereof will be omitted herein in the embodiment of the present disclosure.

In conclusion, in the uplink transmission method provided in the embodiment of the present disclosure, a UE may determine an uplink transmission discard configuration, and when needing to perform uplink discard, the UE performs the uplink discard on the basis of the uplink transmission discard configuration, where the uplink transmission discard configuration includes at least one of a time length or maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

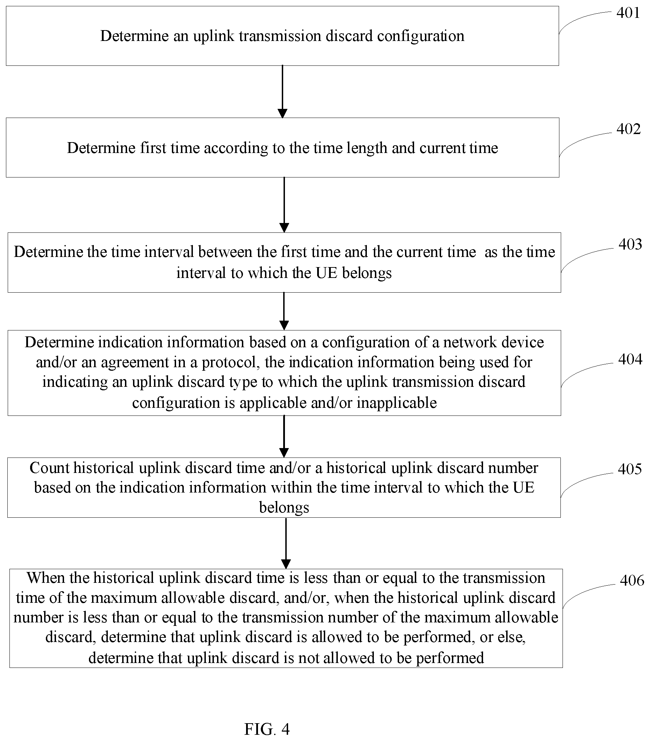

Fig. 4 is a schematic flow diagram of an uplink transmission method provided in an embodiment of the present disclosure, and the method is performed by a UE. As shown in Fig. 4, the uplink transmission method may include the following steps.

Step 401: an uplink transmission discard configuration is determined.

In an embodiment of the present disclosure, detailed introduction for step 401 may refer to the related introduction in the above-mentioned embodiments, repeated descriptions thereof will be omitted herein in the embodiment of the present disclosure.

Step 402: first time is determined according to the time length and current time.

Step 403: the time interval between the first time and the current time is determined as the time interval to which the UE belongs.

Detailed introduction for step 401 to step 403 may refer to the description in the above-mentioned embodiments, repeated descriptions thereof will be omitted herein in the embodiment of the present disclosure.

Step 404: indication information is determined on the basis of a configuration of a network device and/or an agreement in a protocol, the indication information being used for indicating an uplink discard type to which the uplink transmission discard configuration is applicable and/or inapplicable.

It should be noted that, in an embodiment of the present disclosure, uplink discard is divided into different uplink discard types due to different reasons. Specifically, in an embodiment of the present disclosure, the uplink discard type may include at least one of the following types.

Type 1, uplink discard that the UE spontaneously discards uplink transmission due to interference.

In an embodiment of the present disclosure, the same UE may be equipped with various different wireless transceivers such as LTE, 5G, a WIFI, a Bluetooth, and a GNSS, and the type 1 may be, for example, that: in the part of adjacent frequencies or harmonic frequencies, a receiver of the UE may be interfered by a transmitter, for example, the receiver is interfered by the same or different RATs, and in order to solve the problem of interference, the UE may spontaneously discard partial uplink transmission.

Type 2, uplink discard that the UE spontaneously discards uplink transmission due to the limited capacity of the UE.

Illustratively, in an embodiment of the present disclosure, the type 2 may be, for example, that: a multi-SIM UE may not send uplink signals at the same time through a plurality of SIMs (Subscriber Identity Modules), and may only send an uplink signal through one of the SIMs, and therefore, when the multi-SIM UE needs to send uplink signals simultaneously through the plurality of SIMs at a certain time, a part of the uplink signals need to be discarded.

Type 3, uplink discard due to a situation that uplink processing time is less than a time threshold between the current time and actual uplink transmission time.

Illustratively, in an embodiment of the present disclosure, the type 3 may be, for example, that: the minimum processing time of a PUSCH (Physical Uplink Shared Channel) of the UE is 3 ms, but a time interval between the current time of the UE to actual uplink transmission time of the PUSCH is less than 3 ms, the uplink processing time is less than the time threshold between the current time and the actual uplink transmission time, and thus, the UE needs to perform uplink discard on the PUSCH.

Type 4, uplink discard due to a situation that an uplink sending delay is greater than a threshold value.

Illustratively, in an embodiment of the present disclosure, the type 4 may be, for example, that: a feedback of an uplink HARQ (Hybrid Automatic Repeat Request) ACK of the UE may be delayed to be sent due to the change of an uplink and downlink slot allocation, but the sending delay is overlong and exceeds a threshold value configured by a network or agreed in a protocol, and thus, the UE needs to discard the feedback of the uplink HARQ ACK.

Type 5, uplink discard due to a situation that a reserved uplink resource has no sending demand.

Illustratively, in an embodiment of the present disclosure, the type 5 may be, for example, that: for a reserved uplink authorization resource for sending the PUSCH, the UE has no uplink data to be sent, and then, the UE needs to discard the uplink authorization resource for sending the PUSCH.

Type 6, uplink discard due to an uplink transmission conflict.

In an embodiment of the present disclosure, the above-mentioned uplink transmission conflict may specifically include at least one as follows.

First, when a high-priority signal and a low-priority signal need to be sent at the same time, the sending of the low-priority signal is discarded.

Illustratively, in an embodiment of the present disclosure, when the PUSCH and a SR PUCCH (Scheduling Request Physical Uplink Control Channel) need to be sent at the same time, the priority of the PUSCH is higher than that of the SR PUCCH, and thus, the SR PUCCH needs to be discarded.

Second, uplink discard occurs due to limited uplink sending power.

Specifically, in an embodiment of the present disclosure, the total sending power of the UE is constant. Therefore, when the UE needs to send uplink signals in a plurality of cells at the same time, sending power of uplink signals in a part of the cells may be lower on the basis of the limitation from the total sending power of the UE, thus affecting the transmission stability, and leading to discard of a part of the uplink signals.

Illustratively, in an embodiment of the present disclosure, it is supposed that the total sending power of the UE is 23 dBm (decibel relative to one milliwatt), and when the UE needs to send the uplink signals in cell 1 and cell 2 at the same time, the sending power of the uplink signal of cell 2 may be too low due to the sending of the uplink signal of cell 1, and then, the uplink signal of cell 2 is discarded.

It should be further noted that, in an embodiment of the present disclosure, the uplink transmission discard configuration determined by the UE may not be applicable to the above-mentioned various types of uplink discard. For example, in an embodiment of the present disclosure, the uplink transmission discard configuration determined by the UE may be only applicable to a part of the uplink discard types, or may be applicable to all of the uplink discard types, either. Therefore, the UE needs to determine the indication information used for indicating the uplink discard types to which the uplink transmission discard configuration is applicable and/or inapplicable, so that the UE may perform, on the basis of the indication information, uplink discard on the uplink discard type applicable to the uplink transmission discard configuration when performing uplink discard later by means of the uplink transmission discard configuration.

In an embodiment of the present disclosure, the above-mentioned indication information may be used for indicating at least one as follows:
the uplink transmission discard configuration is applicable to all uplink discard types;
the uplink transmission discard configuration is applicable to a first uplink discard type, the first uplink discard type including uplink discard that the UE spontaneously discards uplink transmission due to interference (that is, the first uplink discard type may include the above-mentioned type 1);
the uplink transmission discard configuration is applicable to a second uplink discard type, the second uplink discard type including uplink discard that the UE spontaneously discards uplink transmission due to the limited capacity of the UE (that is, the second uplink discard type may include the above-mentioned type 2);
the uplink transmission discard configuration is inapplicable to a third uplink discard type, the third uplink discard type including at least one as follows:
uplink discard due to a situation that uplink processing time is less than a time threshold between the current time and actual uplink transmission time;
uplink discard due to a situation that an uplink sending delay is greater than a threshold value;
uplink discard due to a situation that a reserved uplink resource has no sending demand; or
uplink discard due to an uplink transmission conflict.

That is, the third uplink discard type may include at least one of the above-mentioned type 3, type 4, type 5, and type 6.

Step 405: a historical uplink discard time and/or a historical uplink discard number is counted on the basis of the indication information within the time interval to which the UE belongs.

In an embodiment of the present disclosure, the historical uplink discard time may be specifically historical uplink discard time of the UE for the uplink discard type to which the uplink transmission discard configuration is applicable, and the historical uplink discard number may be specifically a historical uplink discard number of the UE for the uplink discard type to which the uplink transmission discard configuration is applicable.

Therefore, in an embodiment of the present disclosure, the above-mentioned method that the historical uplink discard time and/or the historical uplink discard number is counted within the time interval to which the UE belongs may include:
historical discard time and/or a historical discard number of uplink discard to which the uplink transmission discard configuration is applicable is counted as the historical uplink discard time and/or the historical uplink discard number on the basis of the indication information; or
historical discard time and/or a historical discard number of uplink discard other than uplink discard to which the uplink transmission discard configuration is inapplicable is counted as the historical uplink discard time and/or the historical uplink discard number on the basis of the indication information.

Illustratively, in an embodiment of the present disclosure, it is supposed that the indication information in the above-mentioned step 404 indicates that the uplink transmission discard configuration is applicable to the first uplink discard type, and it is supposed that uplink discard has been performed for four times within the time interval to which the UE belongs. Wherein the uplink discard types corresponding to the uplink discard of these four times sequentially include the first uplink discard type, the first uplink discard type, the second uplink discard type and the second uplink discard type. Thus, it can be determined that uplink discard corresponding to the first uplink discard type has been performed twice, and then it can be determined that the historical discard number is 2.

Illustratively, in another embodiment of the present disclosure, it is supposed that the indication information in the above-mentioned step 404 indicates that the uplink transmission discard configuration is inapplicable to the third uplink discard type, and it is supposed that uplink discard has been performed for six times within the time interval to which the UE belongs. Wherein the uplink discard types corresponding to the uplink discard of these six times sequentially include the first uplink discard type, the first uplink discard type, the third uplink discard type, the third uplink discard type, the third uplink discard type and the third uplink discard type. Thus, it can be determined that uplink discard other than uplink discard corresponding to the third uplink discard type to which the uplink transmission discard configuration is inapplicable has been performed twice, and then it can be determined that the historical discard number is 2.

It can thus be seen that, in the embodiment of the present disclosure, when counting the historical uplink discard time and/or the historical uplink discard number, the UE only counts, on the basis of the indication information, the uplink discard type to which the uplink transmission discard configuration is applicable. Therefore, various types of uplink discard can be controlled differentially, and the flexibility of uplink discard is ensured.

Step 406: when the historical uplink discard time is less than or equal to the transmission time of the maximum allowable discard, and/or, when the historical uplink discard number is less than or equal to the transmission number of the maximum allowable discard, it is determined that uplink discard is allowed to be performed, or else, it is determined that uplink discard is not allowed to be performed.

Other detailed introduction in the present embodiment may refer to related introduction in the above-mentioned embodiments.

In conclusion, in the uplink transmission method provided in the embodiment of the present disclosure, a UE may determine an uplink transmission discard configuration, and when needing to perform uplink discard, the UE performs the uplink discard on the basis of the uplink transmission discard configuration, where the uplink transmission discard configuration includes at least one of a time length or maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

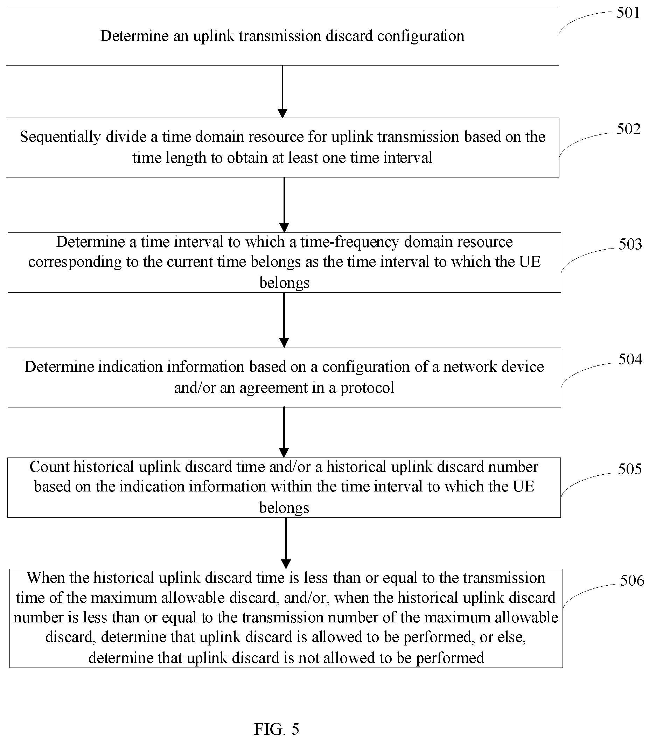

Fig. 5 is a schematic flow diagram of an uplink transmission method provided in an embodiment of the present disclosure, and the method is performed by a UE. As shown in Fig. 5, the uplink transmission method may include the following steps.

Step 501: an uplink transmission discard configuration is determined.

In an embodiment of the present disclosure, detailed introduction for step 501 may refer to the related introduction in the above-mentioned embodiments, repeated descriptions thereof will be omitted herein in the embodiment of the present disclosure.

Step 502: a time domain resource for uplink transmission is sequentially divided on the basis of the time length to obtain at least one time interval.

Step 503: a time interval to which a time-frequency domain resource corresponding to the current time belongs is determined as the time interval to which the UE belongs.

Step 504: indication information is determined on the basis of a configuration of a network device and/or an agreement in a protocol.

In an embodiment of the present disclosure, the indication information is used for indicating an uplink discard type to which the uplink transmission discard configuration is applicable or inapplicable.

Step 505: at least one of a historical uplink discard time and/or a historical uplink discard number is counted on the basis of the indication information within the time interval to which the UE belongs.

In an embodiment of the present disclosure, the method that the UE counts, on the basis of the indication information determined in step 504, the historical uplink discard time and/or the historical uplink discard number within the time interval to which the UE belongs may include:
a historical discard time and/or a historical discard number of uplink discard to which the uplink transmission discard configuration is applicable is counted as the historical uplink discard time and/or the historical uplink discard number; or
a historical discard time and/or a historical discard number of uplink discard other than uplink discard to which the uplink transmission discard configuration is inapplicable is counted as the historical uplink discard time and/or the historical uplink discard number.

Step 506: when the historical uplink discard time is less than or equal to the transmission time of the maximum allowable discard, and/or, when the historical uplink discard number is less than or equal to the transmission number of the maximum allowable discard, it is determined that uplink discard is allowed to be performed, or else, it is determined that uplink discard is not allowed to be performed.

Detailed introduction for the above-mentioned step 501 to step 506 may refer to the related introduction in the above-mentioned embodiments.

In conclusion, in the uplink transmission method provided in the embodiment of the present disclosure, a UE may determine an uplink transmission discard configuration, and when needing to perform uplink discard, the UE performs uplink discard on the basis of the uplink transmission discard configuration, where the uplink transmission discard configuration includes at least one of a time length or maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

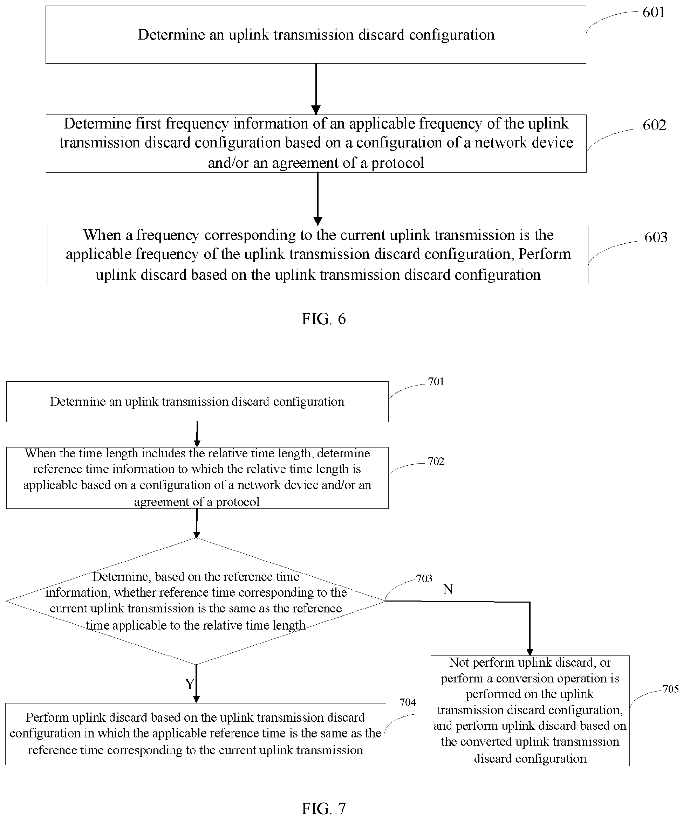

Fig. 6 is a schematic flow diagram of an uplink transmission method provided in an embodiment of the present disclosure, and the method is performed by a UE. As shown in Fig. 6, the uplink transmission method may include the following steps:
step 601: an uplink transmission discard configuration is determined.

In an embodiment of the present disclosure, detailed introduction for step 601 may refer to the related introduction in the above-mentioned embodiments, repeated descriptions thereof will be omitted herein in the embodiment of the present disclosure.

Step 602: first frequency information of an applicable frequency of the uplink transmission discard configuration is determined on the basis of a configuration of a network device and/or an agreement of a protocol.

In an embodiment of the present disclosure, the first frequency information may include at least one as follows:
all service frequencies configured by the UE (such as frequencies corresponding to all service cells in which a UE in a connected state is configured);
one or more service frequencies activated to be used among all the service frequencies configured by the UE (such as a frequency corresponding to an activated cell in all service cells in which a UE in a connected state is configured); and
second frequency information indicating a specified frequency.

In an embodiment of the present disclosure, the above-mentioned second frequency information may include at least one as follows:
a cell type indication of the specified frequency (for example, the cell type indication may be used for indicating at least one of a PCell (Primary Cell), a SCell (Secondary Cell), a PSCell (Primary Secondary Cell) and a SpCell (Special Cell);
a cell group indication of the specified frequency (for example, the cell group indication may be used for indicating at least one of a MCG (Master Cell Group) and a SCG (Secondary Cell Group));
a cell identifier of the specified frequency (for example, the cell identifier may be PCI (Physical Cell Identifier)=1, or CGI (Cell Global Identifier)=1);
a bandwidth part (BWP) identifier of the specified frequency (for example, the BWP identifier may be expressed as BWP ID=1);
a frequency point identifier of the specified frequency (for example, the frequency point identifier may be a serial number of an ARFCN (Absolute Radio Frequency Channel Number) of a central frequency point=1);
a bandwidth of the specified frequency (for example, the bandwidth may be 20 MHz (megahertz);
starting frequency information of the specified frequency (for example, the starting frequency information may be a serial number of an ARFCN of a starting frequency point=1, or a serial number of a starting PRB (Physical Resource Block)=1); and
ending frequency information of the specified frequency (for example, the ending frequency information may be a serial number of an ARFCN of an ending frequency point=1, or a serial number of an ending PRB=1).

Illustratively, in an embodiment of the present disclosure, the above-mentioned first frequency information may, for example, include second frequency information and, and the second frequency information may, for example, include a cell type indication used for indicating a PCell, a cell group indication used for indicating a MCG, and a BWP ID=1. Therefore, it can be determined, on the basis of the second frequency information, that the applicable frequency of the uplink transmission discard configuration is a frequency corresponding to an initial BWP of a PCell of a MCG.

In an embodiment of the present disclosure, the UE may determine, on the basis of the above-mentioned first frequency information, the applicable frequency of the uplink transmission discard configuration, and thus, the UE can distinguish different frequencies to perform uplink discard control.

Step 603: when a frequency corresponding to the current uplink transmission is the applicable frequency of the uplink transmission discard configuration, uplink discard is performed on the basis of the uplink transmission discard configuration.

In an embodiment of the present disclosure, when the frequency corresponding to the current uplink transmission of the UE is the applicable frequency of the uplink transmission discard configuration, that is determined in step 602, uplink discard is performed on the basis of the uplink transmission discard configuration, or else, uplink discard is not performed on the basis of the uplink transmission discard configuration.

Illustratively, in an embodiment of the present disclosure, it is supposed that the applicable frequency of the uplink transmission discard configuration configured by the network device is a frequency corresponding to a SCG, and the frequency corresponding to the current uplink transmission of the UE is the SCG, the UE may perform uplink discard on the basis of the uplink transmission discard configuration.

It can thus be known that, in the embodiment of the present disclosure, uplink discard can be controlled by distinguishing the different frequencies. Therefore, the flexibility of uplink discard is ensured.

Other detailed introduction in the present embodiment may refer to related introduction in the above-mentioned embodiments.

In conclusion, in the uplink transmission method provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length or maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

Fig. 7 is a schematic flow diagram of an uplink transmission method provided in an embodiment of the present disclosure, and the method is performed by a UE. As shown in Fig. 7, the uplink transmission method may include the following steps:
step 701: an uplink transmission discard configuration is determined.

In an embodiment of the present disclosure, detailed introduction for step 701 may refer to the related introduction in the above-mentioned embodiments, repeated descriptions thereof will be omitted herein in the embodiment of the present disclosure.

Step 702: when the time length includes the relative time length, reference time information to which the relative time length is applicable is determined on the basis of a configuration of a network device and/or an agreement of a protocol.

In an embodiment of the present disclosure, the above-mentioned reference time information is used for indicating reference time applicable to the relative time length.

In an embodiment of the present disclosure, the above-mentioned reference time information may include at least one as follows:
an SCS (Sub-Carrier Space) applicable to the relative time length (such as 15 KHz);
a CP (Cyclic Prefix) type applicable to the relative time length (such as a long CP);
a cell type indication applicable to the relative time length;
a cell group indication applicable to the relative time length;
a cell identifier applicable to the relative time length; and
a BWP identifier applicable to the relative time length.

It should be noted that, in an embodiment of the present disclosure, the above-mentioned different reference time may correspond to different time domain resource allocation granularities. The different time domain resource allocation granularities may make that: the absolute time length corresponding to the same relative time length at different reference time is different. That is, the different reference time has the different time domain resource allocation granularity, so that time information indicated by the same relative time length at the different reference time is inconsistent. Illustratively, take the reference time which is the SCS as an example, and Table 1 shows time domain resource allocation granularities corresponding to different SCSs provided in an embodiment of the present disclosure.

**Table 1**

| SCS (KHz) | Number of symbols per slot | Number of slots per frame | Number of slots per subframe |
|---|---|---|---|
| 15 | 14 | 10 | 1 |
| 30 | 14 | 20 | 2 |
| 60 (conventional CP) | 14 | 40 | 4 |
| 60 (expanded CP) | 12 | 40 | 4 |
| 120 | 14 | 80 | 8 |
| 240 | 14 | 160 | 16 |

As shown in Table 1, the time domain resource allocation granularities of the different SCSs are different. Specifically, the time domain resource allocation granularity of SCS=15 is that the number of symbols per slot is 14, the number of slots per frame is 10, and the number of slots per subframe is 1. The time domain resource allocation granularity of SCS=30 is that the number of symbols per slot is 14, the number of slots per frame is 20, and the number of slots per subframe is 2.

The above-mentioned "different time domain resource allocation granularities may make that: the absolute time length corresponding to the same relative time length at different reference time is different" may be mainly embodied in that: it is supposed that a relative time length is 200 slots, absolute time corresponding to the relative time length when SCS=15 is different from an absolute time length corresponding to the relative time length when SCS=30. Specifically, it can be known by referring to Table 1 that, when SCS=15 KHz, the number of slots per subframe is 1, and thus, it can be determined that the relative time length, i.e., 200 slots is equal to 200 subframes when SCS=15 KHz; and it can be known, on the basis of 1 frame=10 subframes=10 ms in a 5G system, that the absolute time length converted from 200 subframes should be 200 ms, that is, the absolute time length corresponding to 200 slots when SCS=15 KHz is 200 ms. When SCS=30 KHz, the number of slots per subframe is 2, and thus, it can be determined that the relative time length, i.e., 200 slots is equal to 400 subframes when SCS=30 KHz; and it can be known, on the basis of 1 frame=10 subframes=10 ms in a 5G system, that the absolute time length converted from 400 subframes should be 400 ms, that is, the absolute time length corresponding to 200 slots when SCS=30 KHz is 400 ms. It can be known by comparison that the absolute time (i.e., 200 ms) corresponding to the relative time length, i.e., 200 slots when SCS=15 KHz is different from the absolute time length (i.e., 400 ms) corresponding to the relative time length, i.e., 200 slots when SCS=30 KHz, in other words, the time information indicated by the relative time length applicable to SCS=15 KHz is inapplicable to SCS=30 KHz.

It should be further noted that the above-mentioned relative time length is mainly used for determining the time interval to which the UE belongs, and then, it needs to be determined, on the basis of the time interval to which the UE belongs, whether uplink discard is allowed to be performed (the detail introduction for the part may refer to the description in the above-mentioned embodiments). Therefore, when the absolute time length corresponding to the same relative time length at the different reference time is different, the time interval which is determined by means of the same time length at the different reference time and to which the UE belongs is also different, and then, subsequent uplink discard performed on the basis of the time interval to which the UE belongs may also be different.

Therefore, in an embodiment of the present disclosure, when the time length in the above-mentioned uplink transmission configuration includes the relative time length, the UE needs to further determine the reference time information to which the relative time length is applicable, so that the UE may subsequently determine, on the basis of the reference time information, whether the reference time applicable to the relative time length is the same as the reference time corresponding to the current uplink transmission (i.e., the reference time actually corresponding to the UE at present). Then, it is further determined whether the time information indicated by the relative time length is applicable to the reference time corresponding to the current transmission, and it is further judged whether uplink discard may be directly performed by means of the relative reference time.

Step 703: it is determined, on the basis of the reference time information, whether reference time corresponding to the current uplink transmission is the same as the reference time applicable to the relative time length, when the reference time corresponding to the current uplink transmission is the same as the reference time applicable to the relative time length, step 704 is performed. When the reference time corresponding to the current uplink transmission is different from the reference time applicable to the relative time length, step 705 is performed.

Specifically, in an embodiment of the present disclosure, when the reference time corresponding to the current uplink transmission of the UE is the same as the reference time applicable to the relative time length, it shows that the time information indicated by the relative time length in the uplink transmission configuration determined by the UE is applicable to the reference time corresponding to the current uplink transmission of the UE, and thus, the UE may perform step 704 so as to directly perform uplink discard on the basis of the uplink transmission configuration.

In another embodiment of the present disclosure, when the reference time corresponding to the current uplink transmission of the UE is different from the reference time applicable to the relative time length (such as there are different SCSs or there are different BWPs or there is the same cell group, but there are different cells), it shows that the time information indicated by the relative time length in the uplink transmission configuration determined by the UE is inapplicable to the reference time corresponding to the current uplink transmission of the UE, at the moment, if uplink discard is still performed on the basis of the relative time length in the uplink transmission configuration, the time interval which is determined on the basis of the relative time length in the uplink transmission configuration and to which the UE belongs may be inaccurate, then, a process of performing subsequent uplink discard is inaccurate, and therefore, step 705 is further performed.

Step 704: uplink discard is performed on the basis of the uplink transmission discard configuration in which the applicable reference time is the same as the reference time corresponding to the current uplink transmission.

Illustratively, in an embodiment of the present disclosure, it is supposed that the relative time length included by the time length in the uplink transmission configuration determined by the UE is 200 slots, the reference time corresponding to the current uplink transmission of the UE is SCS=15 KHz, and the applicable reference time of the relative time length indicated by the reference time information determined in the above-mentioned step 702 is SCS=15 KHz, at the moment, on the basis of a fact that the applicable reference time and the reference time corresponding to the current uplink transmission are both the same as SCS=15 KHz, uplink discard may be performed by means of the relative time length, i.e., 200 slots, in the determined uplink transmission discard configuration.

Step 705: uplink discard is not performed, or a conversion operation is performed on the uplink transmission discard configuration, and uplink discard is performed on the basis of the converted uplink transmission discard configuration.

Specifically, in an embodiment of the present disclosure, when the reference time corresponding to the current uplink transmission of the UE is different from the applicable reference time of the relative time length, the UE may not perform uplink discard.

Exemplarily, in an embodiment of the present disclosure, it is supposed that the relative time length included by the time length in the uplink transmission configuration determined by the UE is 200 slots, the reference time corresponding to the current uplink transmission of the UE is SCS=15 KHz, and the applicable reference time of the relative time length indicated by the reference time information determined in the above-mentioned step 702 is SCS=30 KHz, at the moment, on the basis of a fact that the applicable reference time (that is, SCS=30 KHz) is different from the reference time (that is, SCS=15 KHz) corresponding to the current uplink transmission, the UE may not perform uplink discard.

Or, in another embodiment of the present disclosure, when the reference time corresponding to the current uplink transmission of the UE is different from the applicable reference time of the relative time length, the UE may perform conversion operation on the uplink transmission discard configuration, and perform uplink discard on the basis of the converted uplink transmission discard configuration.

In an embodiment of the present disclosure, the above-mentioned conversion operation may include at least one as follows:

Conversion Operation1: a first operation is performed to convert the relative time length in the uplink transmission discard configuration into a relative time length applicable to the reference time corresponding to the current uplink transmission, the first operation including: the relative time length in the uplink transmission discard configuration is converted into an absolute time length, and the converted absolute time length is converted into the relative time length applicable to the reference time corresponding to the current uplink transmission.

Illustratively, in an embodiment of the present disclosure, it is supposed that the relative time length included by the time length in the uplink transmission configuration determined by the UE is 200 slots, the reference time corresponding to the current uplink transmission of the UE is SCS=15 KHz, and the applicable reference time of the relative time length indicated by the reference time information determined in the above-mentioned step 702 is SCS=30 KHz, at the moment, the first operation may be that:
step a, firstly, the relative time length in the uplink transmission discard configuration is converted into an absolute time length on the basis of the applicable reference time of the relative time length in the uplink transmission discard configuration.

Specifically, it can be known by referring to table 1 that the number of slots per subframe is 1 when SCS=15 KHz, and thus, it can be determined that the relative time length, i.e., 200 slots in the uplink transmission discard configuration is equal to 200 subframes; and it can be known, on the basis of 1 frame=10 subframes=10 ms in a 5G system, that the absolute time length converted from the relative time length, i.e., 200 slots in the uplink transmission discard configuration should be 200 ms.

Step b, the converted absolute time length is converted into the relative time length applicable to the reference time corresponding to the current uplink transmission.

Specifically, it can be known, on the basis of 1 frame=10 subframes=10 ms in a 5G system, that 200 ms is equal to 200 subframes; it can be known by referring to table 1 that the number of slots per subframe is 2 when SCS=30 KHz; and thus, it can be determined that the relative time length corresponding to the 200 subframes when SCS=30 KHz is equal to 200 subframes×2=400 slots.

By performing the above-mentioned step a to step b, the relative time length, i.e., 200 slots applicable to SCS=15 KHz may be converted into a relative time length, i.e., 400 slots when SCS=30 KHz.

Conversion Operation 2: a second operation is performed to convert the relative time of maximum allowable discard in the uplink transmission discard configuration into relative time of maximum allowable discard applicable to the reference time corresponding to the current uplink transmission. The second operation including: the relative time of maximum allowable discard in the uplink transmission discard configuration is converted into an absolute time length, and the converted absolute time length is converted into the relative time of maximum allowable discard applicable to the reference time corresponding to the current uplink transmission.

Illustratively, in an embodiment of the present disclosure, it is supposed that the relative time of maximum allowable discard in the uplink transmission configuration determined by the UE is 200 slots, the reference time corresponding to the current uplink transmission of the UE is SCS=15 KHz, and the applicable reference time of the relative time of maximum allowable discard indicated by the reference time information determined in the above-mentioned step 702 is SCS=30 KHz, at the moment, the second operation may be that:

step c, firstly, the relative time of maximum allowable discard in the uplink transmission discard configuration is converted into an absolute time length on the basis of the applicable reference time of the relative time of maximum allowable discard in the uplink transmission discard configuration.

Specifically, it can be known by referring to table 1 that the number of slots per subframe is 1 when SCS=15 KHz, and thus, it can be determined that the relative time length, i.e., 20 slots in the uplink transmission discard configuration is equal to 20 subframes; and it can be known, on the basis of 1 frame=10 subframes=10 ms in a 5G system, that the absolute time length converted from the relative time length, i.e., 20 slots in the uplink transmission discard configuration should be 20 ms.

Step d, the converted absolute time length is converted into the relative time of maximum allowable discard applicable to the reference time corresponding to the current uplink transmission.

Specifically, it can be known, on the basis of 1 frame=10 subframes=10 ms in a 5G system, that 20 ms is equal to 20 subframes; it can be known by referring to table 1 that the number of slots per subframe is 2 when SCS=30 KHz; and thus, it can be determined that the relative time corresponding to the 20 subframes when SCS=30 KHz is equal to 20 subframes×2=40 slots.

By performing the above-mentioned step c to step d, the relative time of maximum allowable discard, i.e., 20 slots applicable to SCS=15 KHz may be converted into relative time of maximum allowable discard, i.e., 40 slots when SCS=30 KHz.

Conversion Operation 3: a first operation is performed to convert the relative time length in the uplink transmission discard configuration into the relative time length applicable to the reference time corresponding to the current uplink transmission, and a second operation is performed to convert the relative time of maximum allowable discard in the uplink transmission discard configuration into the relative time of maximum allowable discard applicable to the reference time corresponding to the current uplink transmission.

Conversion Operation 4: a third operation is performed on the uplink transmission discard configuration to obtain a converted uplink transmission discard configuration, the third operation satisfying: the maximum allowable discard rate of the converted uplink transmission discard configuration is the same as the maximum allowable discard rate of the unconverted uplink transmission discard configuration;

In an embodiment of the present disclosure, the above-mentioned maximum allowable discard rate may be any one as follows:
the maximum allowable discard rate=the transmission time of maximum allowable discard/the time length; or
the maximum allowable discard rate=the transmission number of maximum allowable discard/the time length; or
the maximum allowable discard rate=the transmission time of maximum allowable discard/a total transmission number within the time length.

Conversion Operation 5: a fourth operation is performed on the uplink transmission discard configuration to obtain a converted uplink transmission discard configuration, the fourth operation satisfying: the maximum allowable discard rate of the converted uplink transmission discard configuration is an integral value closest to the maximum allowable discard rate of the unconverted uplink transmission discard configuration.

Conversion Operation 6: a fifth operation is performed on the uplink transmission discard configuration to obtain a converted uplink transmission discard configuration, the fifth operation satisfying: the maximum allowable discard rate of the converted uplink transmission discard configuration is less than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration.

Conversion Operation 7: a sixth operation is performed on the uplink transmission discard configuration to obtain a converted uplink transmission discard configuration, the sixth operation satisfying: the maximum allowable discard rate of the converted uplink transmission discard configuration is greater than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration.

In an embodiment of the present disclosure, after converting the uplink transmission discard configuration on the basis of the above-mentioned conversion operation, the UE may convert the relative time length inapplicable to the current uplink transmission in the uplink transmission configuration into the relative time length applicable to the current uplink transmission, that is, the time information indicated by the converted relative time length is applicable to the time corresponding to the current uplink transmission. Thus, uplink discard may be subsequently performed on the basis of the converted relative time length, the consistency of understanding of the UE and the network device for the time information in the process of performing uplink discard is ensured, and then, the accuracy of the process of performing uplink discard is ensured.

In conclusion, in the uplink transmission method provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

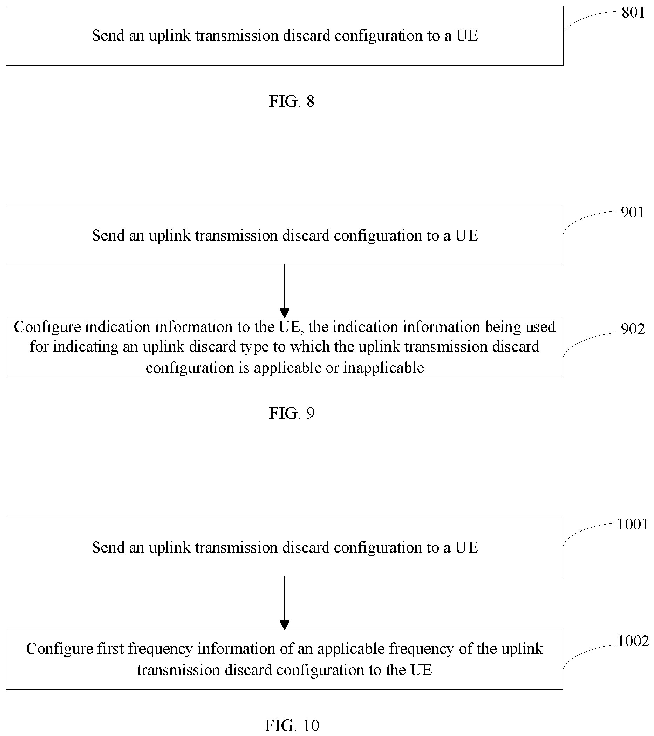

Fig. 8 is a schematic flow diagram of an uplink transmission method provided in an embodiment of the present disclosure, and the method is performed by a network device. As shown in Fig. 8, the uplink transmission method may include the following steps:
step 801: an uplink transmission discard configuration is sent to a UE.

In an embodiment of the present disclosure, the uplink transmission discard configuration may include at least one of a time length and maximum allowable discard information corresponding to the time length. In an embodiment of the present disclosure, the time length is used for determining a time interval to which the UE belongs, and the maximum allowable discard information is used for determining whether the UE is allowed to perform uplink discard within the time interval.

Specifically, in an embodiment of the present disclosure, the time length may include at least one as follows:
an absolute time length (such as 200 ms); and
a relative time length.

In an embodiment of the present disclosure, the above-mentioned relative time length may include at least one as follows:
the number of system frames (for example, the number of SFNs is 2);
the number of subframes (for example, the number of subframes is 2);
the number of slots (for example, the number of slots is 5); and
the number of symbols (for example, the number of OFDM symbols is 2).

In an embodiment of the present disclosure, if the time length includes more than one item, the time length is a sum of all the included items. For example, in an embodiment of the present disclosure, it is supposed that the time length includes the relative time length, the relative time length includes 2 system frames, 5 slots and 2 OFDM symbols, based on this, the time length determined by the UE=2 system frames+5 slots+2 symbols.

Further, in an embodiment of the present disclosure, the maximum allowable discard information may include at least one as follows:
transmission time of maximum allowable discard; and
a transmission number of maximum allowable discard.

Specifically, in an embodiment of the present disclosure, the above-mentioned transmission time of maximum allowable discard may include at least one as follows:
absolute time (such as 100 ms) of maximum allowable discard, a length of the absolute time of maximum allowable discard being less than or equal to the absolute time length; and
relative time of maximum allowable discard, a length of the relative time of maximum allowable discard being less than or equal to the relative time length;
wherein in an embodiment of the present disclosure, the above-mentioned relative time of maximum allowable discard may include at least one as follows:
the number of system frames of maximum allowable discard (for example, the number of SFNs is 2);
the number of subframes of maximum allowable discard (for example, the number of subframes is 2);
the number of slots of maximum allowable discard (for example, the number of slots is 5); and
the number of symbols of maximum allowable discard (for example, the number of OFDM symbols is 2).

In an embodiment of the present disclosure, if maximum allowable discard information includes more than one item, the maximum allowable discard information is a sum of all the included items. Illustratively, in an embodiment of the present disclosure, it is supposed that the maximum allowable discard information includes the relative time of maximum allowable discard, the relative time length includes 2 system frames of maximum allowable discard, 5 slots of maximum allowable discard and 2 symbols of maximum allowable discard, based on this, the maximum allowable discard information determined by the UE=2 system frames+5 slots+2 symbols.

Specifically, other detailed introduction in the embodiment of the present disclosure may refer to related introduction in the above-mentioned embodiment.

In conclusion, in the uplink transmission method provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

Fig. 9 is a schematic flow diagram of an uplink transmission method provided in an embodiment of the present disclosure, and the method is performed by a network device. As shown in Fig. 9, the uplink transmission method may include the following steps:
step 901, an uplink transmission discard configuration is sent to a UE; and
step 902, indication information is configured to the UE, the indication information being used for indicating an uplink discard type to which the uplink transmission discard configuration is applicable or inapplicable.

In an embodiment of the present disclosure, the indication information may be used for indicating at least one as follows:
the uplink transmission discard configuration is applicable to all uplink discard types;
the uplink transmission discard configuration is applicable to a first uplink discard type, the first uplink discard type including uplink discard that the UE spontaneously discards uplink transmission due to interference;
the uplink transmission discard configuration is applicable to a second uplink discard type, the second uplink discard type including uplink discard that the UE spontaneously discards uplink transmission due to the limited capacity of the UE;
the uplink transmission discard configuration is inapplicable to a third uplink discard type. The third uplink discard type including at least one as follows:
uplink discard due to a situation that uplink processing time is less than a time threshold between the current time and actual uplink transmission time;
uplink discard due to a situation that an uplink sending delay is greater than a threshold value;
uplink discard due to a situation that a reserved uplink resource has no sending demand; and
uplink discard due to an uplink transmission conflict.

Specifically, other detailed introduction in the embodiment of the present disclosure may refer to related introduction in the above-mentioned embodiment.

In conclusion, in the uplink transmission method provided in the embodiments of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, meets the anti-interference requirement of the UE and ensures the transmission stability.

Fig. 10 is a schematic flow diagram of an uplink transmission method provided in an embodiment of the present disclosure, and the method is performed by a network device. As shown in Fig. 10, the uplink transmission method may include the following steps:
step 1001, an uplink transmission discard configuration is sent to a UE; and
step 1002, first frequency information of an applicable frequency of the uplink transmission discard configuration is configured to the UE.

In an embodiment of the present disclosure, the first frequency information may include at least one as follows:
all service frequencies configured by the UE;
one or more service frequencies activated to be used among all the service frequencies configured by the UE; and
second frequency information indicating a specified frequency.

In an embodiment of the present disclosure, the second frequency information may include at least one as follows:
a cell type indication of the specified frequency;
a cell group indication of the specified frequency;
a cell identifier of the specified frequency;
a BWP identifier of the specified frequency;
a frequency point identifier of the specified frequency;
a bandwidth of the specified frequency;
starting frequency information of the specified frequency; and
ending frequency information of the specified frequency.

Specifically, other detailed introduction in the embodiment of the present disclosure may refer to related introduction in the above-mentioned embodiment.

In conclusion, in the uplink transmission method provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

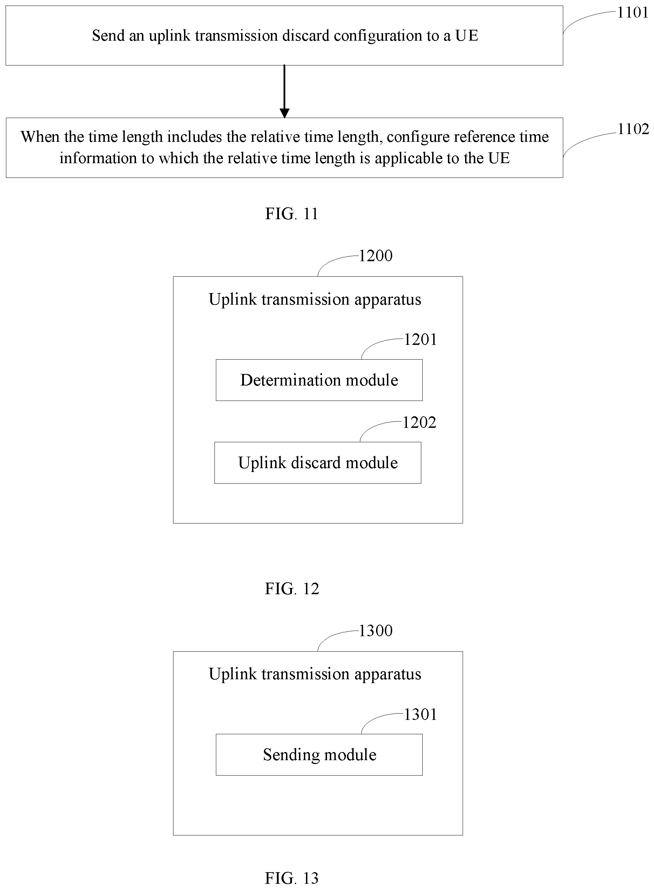

Fig. 11 is a schematic flow diagram of an uplink transmission method provided in an embodiment of the present disclosure, and the method is performed by a network device. As shown in Fig. 11, the uplink transmission method may include the following steps:
step 1101, an uplink transmission discard configuration is sent to a UE; and
step 1102, when the time length includes the relative time length, reference time information to which the relative time length is applicable is configured to the UE.

In an embodiment of the present disclosure, the reference time information is used for indicating reference time applicable tof the relative time length.

The reference time information includes at least one as follows:
a SCS of an applicable frequency of the relative time length;
a CP type of an applicable frequency of the relative time length;
a cell type indication of an applicable frequency of the relative time length;
a cell group indication of an applicable frequency of the relative time length;
a cell identifier of an applicable frequency of the relative time length; and
a BWP identifier of an applicable frequency of the relative time length.

Specifically, other detailed introduction in the embodiment of the present disclosure may refer to related introduction in the above-mentioned embodiment.

In conclusion, in the uplink transmission method provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

Fig. 12 is a schematic structural diagram of an uplink transmission apparatus provided in an embodiment of the present disclosure. As shown in Fig. 12, the apparatus may include:
a determination module 1201 configured to determine an uplink transmission discard configuration, the uplink transmission discard configuration including at least one of a time length and maximum allowable discard information corresponding to the time length; wherein the time length is used for determining a time interval to which the UE belongs, and the maximum allowable discard information is used for determining whether the UE is allowed to perform uplink discard within the time interval; and
an uplink discard module 1202 configured to, when needing to perform uplink discard, perform uplink discard on the basis of the uplink transmission discard configuration.

In conclusion, in the uplink transmission apparatus provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

In some examples, in an embodiment of the present disclosure, the time length includes at least one as follows:
an absolute time length; and
a relative time length.

In some examples, in an embodiment of the present disclosure, the relative time length includes at least one as follows:
the number of system frames;
the number of subframes;
the number of slots; and
the number of symbols.

In some examples, in an embodiment of the present disclosure, the maximum allowable discard information includes at least one as follows:
transmission time of the maximum allowable discard; and
a transmission number of the maximum allowable discard.

In some examples, in an embodiment of the present disclosure, the transmission time of the maximum allowable discard includes at least one as follows:
absolute time of the maximum allowable discard, a length of the absolute time of the maximum allowable discard being less than or equal to the absolute time length; and
relative time of the maximum allowable discard, a length of the relative time of the maximum allowable discard being less than or equal to the relative time length;

In some examples, in an embodiment of the present disclosure, the relative time of the maximum allowable discard includes at least one as follows:
the number of system frames of the maximum allowable discard;
the number of subframes of the maximum allowable discard;
the number of slots of the maximum allowable discard; and
the number of symbols of the maximum allowable discard.

In some examples, in an embodiment of the present disclosure, the above-mentioned uplink discard module 1202 is further configured to:
determine first time according to the time length and the current time, wherein a time interval between the first time and the current time is the time length;
determine the time interval between the first time and the current time as the time interval to which the UE belongs;
count historical uplink discard time and/or a historical uplink discard number within the time interval to which the UE belongs, the historical uplink discard time including at least one of absolute time of historical uplink discard and relative time of historical uplink discard; and
when the historical uplink discard time is less than or equal to the transmission time of the maximum allowable discard, and/or, when the historical uplink discard number is less than or equal to the transmission number of the maximum allowable discard, determine that uplink discard is allowed to be performed, or else, determine that uplink discard is not allowed to be performed.

In some examples, in an embodiment of the present disclosure, the above-mentioned uplink discard module 1202 is further configured to:
sequentially divide a time domain resource for uplink transmission on the basis of the time length to obtain at least one time interval, wherein a length of one time interval is equal to or less than the time length;
determine a time interval to which a time-frequency domain resource corresponding to the current time belongs as the time interval to which the UE belongs;
count historical uplink discard time and/or a historical uplink discard number within the time interval to which the UE belongs, the historical uplink discard time including at least one of absolute time of historical uplink discard and relative time of historical uplink discard; and
when the historical uplink discard time is less than or equal to the transmission time of maximum allowable discard, and/or, when the historical uplink discard number is less than or equal to the transmission number of maximum allowable discard, determine that uplink discard is allowed to be performed, or else, determine that uplink discard is not allowed to be performed.

In some examples, in an embodiment of the present disclosure, the above-mentioned apparatus is further configured to:
determine indication information on the basis of a configuration of a network device and/or an agreement in a protocol, the indication information being used for indicating an uplink discard type to which the uplink transmission discard configuration is applicable or inapplicable.

In some examples, in an embodiment of the present disclosure, the indication information is used for indicating at least one as follows:
the uplink transmission discard configuration is applicable to all uplink discard types;
the uplink transmission discard configuration is applicable to a first uplink discard type, the first uplink discard type including uplink discard that a UE spontaneously discards uplink transmission due to interference;
the uplink transmission discard configuration is applicable to a second uplink discard type, the second uplink discard type including uplink discard that a UE spontaneously discards uplink transmission due to the limited capacity of the UE;
the uplink transmission discard configuration is inapplicable to a third uplink discard type. The third uplink discard type including at least one as follows:
uplink discard due to a situation that uplink processing time is less than a time threshold between the current time and actual uplink transmission time;
uplink discard due to a situation that an uplink sending delay is greater than a threshold value;
uplink discard due to a situation that a reserved uplink resource has no a sending demand; and
uplink discard due to an uplink transmission conflict.

In some examples, in an embodiment of the present disclosure, the above-mentioned uplink discard module 1202 is further configured to:
count historical discard time and/or a historical discard number of uplink discard to which the uplink transmission discard configuration is applicable as the historical uplink discard time and/or the historical uplink discard number; or
count historical discard time and/or a historical discard number of uplink discard other than uplink discard to which the uplink transmission discard configuration is inapplicable as the historical uplink discard time and/or the historical uplink discard number.

In some examples, in an embodiment of the present disclosure, a method for determining the uplink transmission discard configuration includes at least one as follows:
the uplink transmission discard configuration sent by a network device is obtained; and
the uplink transmission discard configuration is determined on the basis of an agreement of a protocol.

In some examples, in an embodiment of the present disclosure, the above-mentioned apparatus is further configured to:
determine first frequency information of an applicable frequency of the uplink transmission discard configuration on the basis of a configuration of a network device and/or an agreement of a protocol.

In some examples, in an embodiment of the present disclosure, the first frequency information includes at least one as follows:
all service frequencies configured by the UE;
one or more service frequencies activated to be used among all the service frequencies configured by the UE; and
second frequency information indicating a specified frequency;

In some examples, in an embodiment of the present disclosure, the second frequency information includes at least one as follows:
a cell type indication of the specified frequency;
a cell group indication of the specified frequency;
a cell identifier of the specified frequency;
a BWP identifier of the specified frequency;
a frequency point identifier of the specified frequency;
a bandwidth of the specified frequency;
starting frequency information of the specified frequency; and
ending frequency information of the specified frequency.

In some examples, in an embodiment of the present disclosure, the above-mentioned uplink discard module 1202 is further configured to:
when a frequency corresponding to the current uplink transmission is the applicable frequency of the uplink transmission discard configuration, perform uplink discard on the basis of the uplink transmission discard configuration.

In some examples, in an embodiment of the present disclosure, the above-mentioned apparatus is further configured to:
when the time length includes the relative time length, determine, on the basis of a configuration of a network device and/or an agreement of a protocol, reference time information to which the relative time length is applicable; the reference time information being used for indicating applicable reference time of the relative time length;
wherein the reference time information includes at least one as follows:
an SCS applicable to the relative time length;
a CP type applicable to the relative time length;
a cell type indication applicable to the relative time length;
a cell group indication applicable to the relative time length;
a cell identifier applicable to the relative time length; and
a BWP identifier applicable to the relative time length.

In some examples, in an embodiment of the present disclosure, the above-mentioned uplink discard module 1202 is further configured to:
determine, on the basis of the reference time information, whether reference time corresponding to the current uplink transmission is the same as the reference time applicable to the relative time length;
when the reference time corresponding to the current uplink transmission is the same as the reference time applicable to the relative time length, perform uplink discard on the basis of the uplink transmission discard configuration in which the applicable reference time is the same as the reference time corresponding to the current uplink transmission; and
when the reference time corresponding to the current uplink transmission is different from the reference time applicable to the relative time length, not perform uplink discard, or perform a conversion operation on the uplink transmission discard configuration, and perform uplink discard on the basis of the converted uplink transmission discard configuration.

In some examples, in an embodiment of the present disclosure, the conversion operation includes at least one as follows:
a first operation is performed to convert the relative time length in the uplink transmission discard configuration into a relative time length applicable to the reference time corresponding to the current uplink transmission, the first operation including: the relative time length in the uplink transmission discard configuration is converted into an absolute time length, and the converted absolute time length is converted into the relative time length applicable to the reference time corresponding to the current uplink transmission;
a second operation is performed to convert the relative time of the maximum allowable discard in the uplink transmission discard configuration into relative time of the maximum allowable discard applicable to the reference time corresponding to the current uplink transmission, the second operation including: the relative time of the maximum allowable discard in the uplink transmission discard configuration is converted into an absolute time length, and the converted absolute time length is converted into the relative time of the maximum allowable discard applicable to the reference time corresponding to the current uplink transmission;
a first operation is performed to convert the relative time length in the uplink transmission discard configuration into the relative time length applicable to the reference time corresponding to the current uplink transmission, and a second operation is performed to convert the relative time of the maximum allowable discard in the uplink transmission discard configuration into the relative time of the maximum allowable discard applicable to the reference time corresponding to the current uplink transmission;
a third operation is performed on the uplink transmission discard configuration to obtain a converted uplink transmission discard configuration, the third operation satisfying: the maximum allowable discard rate of the converted uplink transmission discard configuration is the same as the maximum allowable discard rate of the unconverted uplink transmission discard configuration;
a fourth operation is performed on the uplink transmission discard configuration to obtain a converted uplink transmission discard configuration, the fourth operation satisfying: the maximum allowable discard rate of the converted uplink transmission discard configuration is an integral value closest to the maximum allowable discard rate of the unconverted uplink transmission discard configuration;
a fifth operation is performed on the uplink transmission discard configuration to obtain a converted uplink transmission discard configuration, the fifth operation satisfying: the maximum allowable discard rate of the converted uplink transmission discard configuration is less than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration; and
a sixth operation is performed on the uplink transmission discard configuration to obtain a converted uplink transmission discard configuration, the sixth operation satisfying: the maximum allowable discard rate of the converted uplink transmission discard configuration is greater than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration.

In some examples, in an embodiment of the present disclosure, the maximum allowable discard rate=the transmission time of the maximum allowable discard/the time length; or
the maximum allowable discard rate=the transmission number of the maximum allowable discard/the time length; or
the maximum allowable discard rate=the transmission time of the maximum allowable discard/a total transmission number within the time length.

Fig. 13 is a schematic structural diagram of an uplink transmission apparatus provided in an embodiment of the present disclosure. As shown in Fig. 13, the apparatus may include:
a sending module 1301 configured to send an uplink transmission discard configuration to a UE, the uplink transmission discard configuration including at least one of a time length and maximum allowable discard information corresponding to the time length; wherein the time length is used for determining a time interval to which the UE belongs, and the maximum allowable discard information is used for determining whether the UE is allowed to perform uplink discard within the time interval.

In conclusion, in the uplink transmission apparatus provided in the embodiment of the present disclosure, a UE may determine an uplink transmission discard configuration, and when needing to perform uplink discard, the UE performs uplink discard on the basis of the uplink transmission discard configuration, wherein the uplink transmission discard configuration includes at least one of a time length and maximum allowable discard information corresponding to the time length, the time length is used for determining a time interval to which the UE belongs, and the maximum allowable discard information is used for determining whether the UE is allowed to perform uplink discard within the time interval. Therefore, provided in the embodiments of the present disclosure is the uplink transmission method, which is used for uplink discard of a UE, thus meeting the anti-interference requirement of the UE and ensuring the transmission stability.

In some examples, in an embodiment of the present disclosure, the time length includes at least one as follows:
an absolute time length; and
a relative time length.

In some examples, in an embodiment of the present disclosure, the relative time length includes at least one as follows:
the number of system frames;
the number of subframes;
the number of slots; and
the number of symbols.

In some examples, in an embodiment of the present disclosure, the maximum allowable discard information includes at least one as follows:
transmission time of maximum allowable discard; and
a transmission number of the maximum allowable discard.

In some examples, in an embodiment of the present disclosure, the transmission time of the maximum allowable discard includes at least one as follows:
absolute time of the maximum allowable discard, a length of the absolute time of the maximum allowable discard being less than or equal to the absolute time length; and
relative time of the maximum allowable discard, a length of the relative time of the maximum allowable discard being less than or equal to the relative time length;

In some examples, in an embodiment of the present disclosure, the relative time of the maximum allowable discard includes at least one as follows:
the number of system frames of the maximum allowable discard;
the number of subframes of the maximum allowable discard;
the number of slots of the maximum allowable discard; and
the number of symbols of the maximum allowable discard.

In some examples, in an embodiment of the present disclosure, the above-mentioned apparatus is further configured to:
configure indication information to the UE, the indication information being used for indicating an uplink discard type to which the uplink transmission discard configuration is applicable or inapplicable.

In some examples, in an embodiment of the present disclosure, the indication information is used for indicating at least one as follows:
the uplink transmission discard configuration is applicable to all uplink discard types;
the uplink transmission discard configuration is applicable to a first uplink discard type, the first uplink discard type including uplink discard that the UE spontaneously discards uplink transmission due to interference;
the uplink transmission discard configuration is applicable to a second uplink discard type, the second uplink discard type including uplink discard that the UE spontaneously discards uplink transmission due to the limited capacity of the UE;
the uplink transmission discard configuration is inapplicable to a third uplink discard type, the third uplink discard type including at least one as follows:
uplink discard due to a situation that uplink processing time is less than a time threshold between the current time and actual uplink transmission time;
uplink discard due to a situation that an uplink sending delay is greater than a threshold value;
uplink discard due to a situation that a reserved uplink resource has no sending demand; and
uplink discard due to an uplink transmission conflict.

In some examples, in an embodiment of the present disclosure, the above-mentioned apparatus is further configured to:
configure first frequency information of an applicable frequency of the uplink transmission discard configuration to the UE.

In some examples, in an embodiment of the present disclosure, the first frequency information includes at least one as follows:
all service frequencies configured by the UE;
one or more service frequencies activated to be used among all the service frequencies configured by the UE; and
second frequency information indicating a specified frequency.

In some examples, in an embodiment of the present disclosure, the second frequency information includes at least one as follows:
a cell type indication of the specified frequency;
a cell group indication of the specified frequency;
a cell identifier of the specified frequency;
a BWP identifier of the specified frequency;
a frequency point identifier of the specified frequency;
a bandwidth of the specified frequency;
starting frequency information of the specified frequency; and
ending frequency information of the specified frequency.

In some examples, in an embodiment of the present disclosure, the above-mentioned apparatus is further configured to:
when the time length includes the relative time length, configure reference time information to which the relative time length is applicable to the UE; the reference time information being used for indicating applicable reference time of the relative time length;
wherein the reference time information includes at least one as follows:
a SCS of an applicable frequency of the relative time length;
a CP type of an applicable frequency of the relative time length;
a cell type indication of an applicable frequency of the relative time length;
a cell group indication of an applicable frequency of the relative time length;
a cell identifier of an applicable frequency of the relative time length; and
a BWP identifier of an applicable frequency of the relative time length.

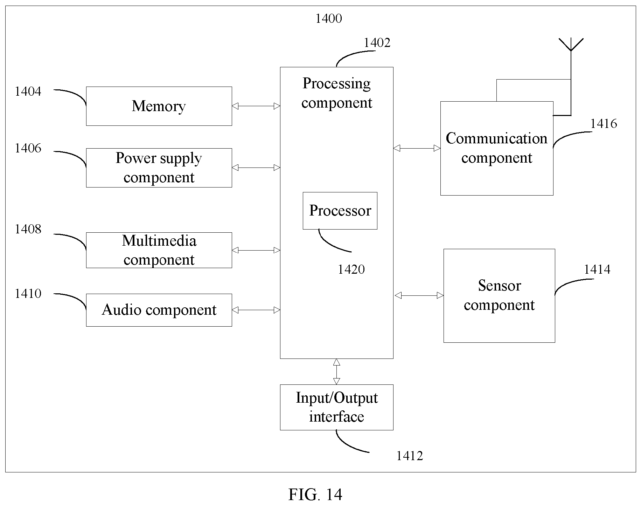

Fig. 14 is a block diagram of a user equipment UE1400 provided in an embodiment of the present disclosure. For example, UE 1400 may be a mobile phone, a computer, a digital broadcast terminal device, a message transceiving device, a game console, a tablet device, a medical device, a fitness equipment, a personal digital assistant, etc.

Referring to Fig. 14, the UE1400 may include one or more of the following components: a processing component 1402, a memory 1404, a power supply component 1406, a multimedia component 1408, an audio component 1410, an input/output (I/O) interface 1412, a sensor component 1414, and a communication component 1416.

The processing component 1402 generally controls the overall operation of the UE1400, such as an operation related to display, telephone calling, data communication, camera operation and recording operation. The processing component 1402 may include at least one processor 1420 to execute instructions so as to compete all or parts of steps of the above-mentioned method. In addition, the processing component 1402 may include at least one module which facilitates interaction between the processing component 1402 and other components. For example, the processing component 1402 may include a multimedia module to facilitate interaction between the multimedia component 1408 and the processing component 1402.

The memory 1404 is configured to store various types of data so as to support operations on the UE 1400. Examples of the data include instructions for any application or method operated on the UE1400, contact data, telephone book data, information, pictures, videos, etc. The memory 1404 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 1406 provides power for the various components of the UE1400. The power supply component 1406 may include a power management system, at least one power supply, and other components related to the generation, management and power distribution of the UE1400.

The multimedia component 1408 includes a screen providing an output interface between the UE 1400 and a user. In some embodiments, the screen may include a liquid crystal display (LCD) and a touch panel (TP). If the screen includes the touch panel, the screen may be implemented as a touch screen to receive an input signal from the user. The touch panel includes at least one touch sensor to sense touching, sliding and gestures on the touch panel. The touch sensors can not only sense a boundary of a touching or sliding action, but also detect a wakeup time and a pressure which are related to the touching or sliding operation. In some embodiments, the multimedia component 1408 includes a front camera and/or a rear camera. When the UE 1400 is in an operation mode, such as a shooting mode or a video mode, the front camera and/or the rear camera may receive external multimedia data. Each of the front camera and the rear camera may be a fixed optical lens system or have a focal length and optical zooming ability.

The audio component 1410 is configured to output and/input an audio signal. For example, the audio component 1410 includes a microphone (MIC). When the UE1400 is in an operation mode, such as a calling mode, a recording mode and a voice recognition mode, the MIC is configured to receive an external audio signal. The received audio signal may be further stored in the memory 1404 or sent by the communication component 1416. In some embodiments, the audio component 1410 further includes a loudspeaker for outputting the audio signal.

The I/O interface 1412 is an interface provided between the processing component 1402 and a peripheral interface module, and the above-mentioned peripheral interface module may be a keyboard, a click wheel, buttons, etc. These buttons may include, but are not limited to a home button, a volume button, a start button, and a lock button.

The sensor component 1413 includes at least one sensor for providing various aspects of state evaluation for the UE1400. For example, the sensor component 1413 may detect an on/off state of the UE1400 and relative locations of the components, for example, the components are a display and a keypad of the UE1400. The sensor component 1413 may also detect the position change of the UE1400 or one component of the UE1400, the existence or inexistence of contact between a user and the UE1400, a direction or acceleration/deceleration of the UE1400, and the temperature change of the UE1400. The sensor component 1413 may include a proximity sensor configured to detect the existence of nearby objects when there is no any physical contact. The sensor component 1413 may further include an optical sensor, such as a CMOS or CCD image sensor, used in imaging applications. In some embodiments, the sensor component 1413 may further include an acceleration sensor, a gyroscope sensor, a magnetic sensor, a pressure sensor or a temperature sensor.

The communication component 1416 is configured to facilitate wired or wireless communication between the UE1400 and other devices. The UE1400 may be accessed to a wireless network based on a communication standard, such as WiFi, 2G or 3G, or combinations thereof. In an exemplary embodiment, the communication component 1416 receives a broadcast signal or broadcast-related information from an external broadcast management system through a broadcast channel. In an exemplary embodiment, the communication component 1416 further includes a near field communication (NFC) module to promote short-range communication. For example, the NFC module may be implemented on the basis of a radio frequency identification (RFID) technology, an infrared data association (IrDA) technology, an ultra-wide band (UWB) technology, a Bluetooth (BT) technology, and other technologies.

In an exemplary embodiment, the UE1400 may be implemented by at least one application specific integrated circuit (ASIC), digital signal processor (DSP), digital signal processing device (DSPD), programmable logic device (PLD), field-programmable gate array (FPGA), controller, micro-controller, microprocessor or other electronic elements, and is used for performing the above-mentioned method.

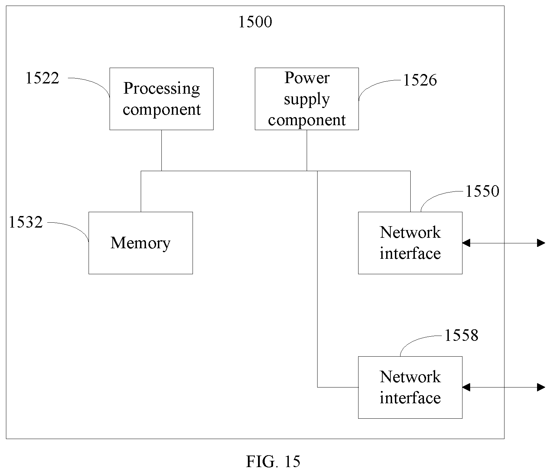

Fig. 15 is a block diagram of a network side device 1500 provided in an embodiment of the present disclosure. For example, the network side device 1500 may be provided as a network side device. Refer to Fig. 15, the network side device 1500 includes a processing component 1511 further including at least one processor and a memory resource represented by a memory 1532 and configured to store instructions, such as applications, that may be performed by a processing component 1522. The applications stored in the memory 1532 may include one or more modules with each corresponding to a set of instructions. In addition, a processing component 1515 is configured to execute the instructions so that the aforementioned any method, such as the method shown in Fig. 1, applied to the network side device is executed.

The network side device 1500 may further include a power supply component 1526 configured to execute power supply management for the network side device 1500, a wired or wireless network interface 1550 configured to connect the network side device 1500 to a network, and an input/output (I/O) interface 1558. The network side device 1500 may be based on an operating system, such as Windows Server TM, Mac OS XTM, Unix TM, Linux TM, Free BSDTM or the like, stored in the memory 1532.

In the above-mentioned embodiments provided in the present disclosure, the method provided in the embodiments of the present disclosure is respectively introduced from the perspectives of a network side device and a UE. In order to achieve all the functions in the method provided in the above-mentioned embodiments of the present disclosure, the network side device and the UE may include a hardware structure and a software module, and all of the above-mentioned functions are achieved in a form of the hardware structure, or the software module or the hardware structure and the software module. A certain function in the above-mentioned functions may be executed in a way of the hardware structure, or the software module or the hardware structure and the software module.

In the above-mentioned embodiments provided in the present disclosure, the method provided in the embodiments of the present disclosure is respectively introduced from the perspectives of a network side device and a UE. In order to achieve all the functions in the method provided in the above-mentioned embodiments of the present disclosure, the network side device and the UE may include a hardware structure and a software module, and all of the above-mentioned functions are achieved in a form of the hardware structure, or the software module or the hardware structure and the software module. A certain function in the above-mentioned functions may be executed in a way of the hardware structure, or the software module or the hardware structure and the software module.

An embodiment of the present disclosure provides a communication apparatus. The communication apparatus may include a transceiving module and a processing module. The transceiving module may include a sending module and/or a receiving module, the sending module is configured to achieve a sending function, the receiving module is configured to achieve a receiving function, and the transceiving module may achieve the sending function and/or the receiving function.

The communication apparatus may be a terminal device (such as the terminal device in the above-mentioned method embodiment), or an apparatus in a terminal device, or an apparatus that may be matched with the terminal device. Or, the communication apparatus may be a network device, or an apparatus in the network device, or an apparatus that may be matched with the network device.

An embodiment of the present disclosure provides another communication apparatus. The communication apparatus may be a network device, or a terminal device (such as the terminal device in the above-mentioned method embodiment), or a chip, a chip system or a processor, etc., supporting the network device to implement the above-mentioned method, or a chip, a chip system or a processor, etc., supporting the terminal device to implement the above-mentioned method. The apparatus may be used for implementing the method described in the above-mentioned method embodiment, which may specifically refer to the description in the above-mentioned method embodiment.

The communication apparatus may include one or more processors. The processor may be a general-purpose processor or a special-purpose processor, etc. For example, the processor may be a baseband processor or a central processor. The baseband processor may be used for processing a communication protocol and communication data, and the central processor may be used for controlling a communication apparatus (such as a base station, a baseband chip, a terminal device, a terminal device chip, and a DU or a CU), executing a computer program, and processing data of the computer program.

In some examples, the communication apparatus may further include one or more memories in which a computer program may be stored, and the memory executes the computer program, so that the communication apparatus performs the method described in the above-mentioned method embodiment. In some examples, the memory may further store data. The communication apparatus and the memory may be disposed alone or integrated together.

In some examples, the communication apparatus may further include a transceiver and an antenna. The transceiver may be referred to as a transceiving unit, a transceiving machine, or a transceiving circuit, etc., and is configured to achieve a transceiving function. The transceiver may include a receiver and a sender, the receiver may be referred to as a receiving machine or a receiving circuit, etc., and is configured to achieve a receiving function; and the sender may be referred to as a sending machine or a sending circuit, etc., and is configured to achieve a sending function.

In some examples, the communication apparatus may further include one or more interface circuits. The interface circuit is configured to receive code instructions and transmit the code instructions to the processor. The processor runs the code instructions, so that the communication apparatus performs the method described in the above-mentioned method embodiment.

The communication apparatus may be a terminal device (such as the terminal device in the above-mentioned method embodiments): the processor is configured to perform the method of any one shown in Fig. 1 to Fig. 7.

The communication apparatus may be a network device: the transceiver is configured to perform the method of any one shown in Fig. 8 to Fig. 11.

In an implementation, the processor may include a transceiver configured to achieve receiving and sending functions. For example, the transceiver may be a transceiving circuit, or an interface, or an interface circuit. The transceiving circuit, the interface or the interface circuit configured to achieve the receiving and sending functions may be separated or integrated together. The above-mentioned transceiving circuit, interface or interface circuit may be configured to read and write codes/data, or the above-mentioned transceiving circuit, interface or interface circuit may be configured to transmit or deliver signals.

In an implementation, the processor may store a computer program, and the computer program runs on the processor, so that the communication apparatus may perform the method described in the above-mentioned method embodiment. The computer program may be solidified in the processor, in this case, the processor may be achieved by hardware.

In an implementation, the communication apparatus may include a circuit which may achieve the sending or receiving or communication function in the above-mentioned method embodiment. The processor and the transceiver that are described in the present disclosure may be achieved on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be made by using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), and gallium arsenide (GaAs).

The communication apparatus described in above embodiment may be a network device or a terminal device (such as the terminal device in the above-mentioned method embodiment), however, the scope of the communication apparatus described in the present disclosure is not limited thereto, and it is possible that the structure of the communication apparatus is not limited. The communication apparatus may be an independent device or a part of a larger device. For example, the communication apparatus may be:
(1) an independent integrated circuit (IC), or a chip, or a chip system, or a subsystem;
(2) a set provided with one or more ICs, and in some examples, the set of the ICs may also include a storage component used for storing data and a computer program;
(3) an ASIC, such as a Modem;
(4) a module that may be embedded into other devices;
(5) a receiver, a terminal device, a smart terminal device, a cell phone, a wireless device, a handset, a mobile unit, a vehicle-mounted device, a network device, a cloud device, an artificial intelligent device, etc.; and
(6) other devices, etc.

For a situation that the communication apparatus may be a chip or a chip system, the chip includes a processor and an interface. There may be one or more processors, and there may be a plurality of interfaces.

In some examples, the chip may further include a memory configured to store necessary computer programs and data.

It can be further known by the skilled in the art that various illustrative logical blocks and steps listed in the embodiments of the present disclosure can be achieved through electronic hardware, computer software or a combination thereof. Whether such a function is achieved by hardware or software depends on a specific application and design requirements of a whole system. For each specific application, the skilled in the art can achieve the function by using various methods, however, such an achievement should be understood as falling within the protection scope of the embodiments of the present disclosure.

An embodiment of the present disclosure further provides a system for determining a sidelink time length. The system includes the communication apparatus as a terminal device (such as a first terminal device in the above-mentioned method embodiment) and a communication apparatus as a network device in the above-mentioned embodiment, or the system includes a communication apparatus as a terminal device (such as a first terminal device in the above-mentioned method embodiment) and a communication apparatus as a network device in the above-mentioned embodiment.

The present disclosure further provides a readable storage medium having instructions stored thereon, and the instructions, when executed by a computer, implementing the function in any one of the above-mentioned method embodiments.

The present disclosure further provides a computer program product which, when executed by a computer, implements the function in any one of the above-mentioned method embodiments.

The above-mentioned embodiments can be entirely or partially achieved through software, hardware, firmware or any combinations thereof. When achieved by using the software, the embodiments can be entirely or partially achieved in a form of a computer program product. The computer program product includes one or more computer programs. When the computer programs are loaded and executed on a computer, processes or functions based on the embodiments of the present disclosure are entirely or partially generated. The computer may be a general-purpose computer, a special-purpose computer, a computer network, or other programmable apparatuses. The computer programs may be stored in a computer-readable storage medium, or transmitted from one computer-readable storage medium to another computer-readable storage medium, for example, the computer programs may be transmitted from one website, computer, server or data center to another website, computer, server or data center in a wired (such as a coaxial cable, an optical fiber, and a digital subscriber line (DSL)) or wireless (such as infrared, wireless, and microwave) way. The computer-readable storage medium may be any available medium that may be accessed by the computer or an integrated data storage device such as a server and a data center including one or more available media. The available medium can be a magnetic medium (such as a floppy disk, a hard disk, and a cassette), an optical medium (such as a high-density digital video disc (DVD)), or a semiconductor medium (such as a solid state disk (SSD)), etc.

It can be understood by those of ordinary skill in the art that various digital numbers such as first and second involved in the present disclosure are only for distinguishing for facilitating description, are not intended to limit the scope of the embodiments of the present disclosure, but also denote a chronological order.

"At least one" in the present disclosure may be described as one or more, "a plurality of" may be two, three, four or more, which is not limited in the present disclosure. In the embodiments of the present disclosure, for a technical feature, technical features in such a technical feature are distinguished by "first", "second", "third", "A", "B", "C", "D", etc., and there are no chronological or size order among the technical features described by the "first", "second", "third", "A", "B", "C", and "D".

Those skilled in the art will readily envision other implementation solutions of the present disclosure after considering the description and putting the present disclosure disclosed herein into practice. The present disclosure aims at covering any variations, purposes or adaptive changes of the present disclosure, and these variations, purposes or adaptive changes conform to general principles of the present disclosure and include common general knowledge or conventional technical means in the undisclosed technical field of the present disclosure. The description and the embodiments are only regarded to be exemplary, and the true scope and spirits of the present disclosure are appointed by the following claims.

It should be understood that the present disclosure is not limited to precise structures which have been described above and shown in the accompanying drawings, and various modifications and alterations may be made without departing from the scope thereof. The scope of the present disclosure is only limited by the appended claims.

## Claims

1. An uplink transmission method performed by a user equipment, UE, the method comprising:
determining an uplink transmission discard configuration, the uplink transmission discard configuration comprising at least one of a time length or maximum allowable discard information corresponding to the time length; wherein the time length is used for determining a time interval to which the UE belongs, and the maximum allowable discard information is used for determining whether the UE is allowed to perform uplink discard within the time interval; and
in response to needing to perform uplink discard, performing the uplink discard based on the uplink transmission discard configuration.

2. The method of claim 1, wherein the time length comprises at least one of
an absolute time length; or
a relative time length;
wherein the relative time length comprises at least one of
a number of system frames;
a number of subframes;
a number of slots; or
a number of symbols.

3. The method of claim 2, wherein the maximum allowable discard information comprises at least one of
transmission time of maximum allowable discard; or
a transmission number of the maximum allowable discard.

4. The method of claim 3, wherein the transmission time of the maximum allowable discard comprises at least one of
an absolute time of the maximum allowable discard, a length of the absolute time of the maximum allowable discard being less than or equal to the absolute time length; or
a relative time of the maximum allowable discard, a length of the relative time of the maximum allowable discard being less than or equal to the relative time length;
wherein the relative time of the maximum allowable discard comprises at least one of
a number of system frames of the maximum allowable discard;
a number of subframes of the maximum allowable discard;
a number of slots of the maximum allowable discard; or
a number of symbols of the maximum allowable discard.

5. The method of claim 3, wherein performing the uplink discard based on the uplink transmission discard configuration comprises:
determining first time according to the time length and a current time, wherein a time interval between the first time and the current time is the time length;
determining the time interval between the first time and the current time as the time interval to which the UE belongs;
counting at least one of a historical uplink discard time or a historical uplink discard number within the time interval to which the UE belongs, the historical uplink discard time comprising at least one of an absolute time of historical uplink discard or a relative time of historical uplink discard; and
in response to at least one of the historical uplink discard time being less than or equal to the transmission time of the maximum allowable discard, or the historical uplink discard number being less than or equal to the transmission number of the maximum allowable discard, determining that uplink discard is allowed to be performed, or else, determining that uplink discard is not allowed to be performed.

6. The method of claim 3, wherein performing the uplink discard based on the uplink transmission discard configuration comprises:
obtaining at least one time interval by sequentially dividing a time domain resource for uplink transmission based on the time length, wherein a length of one time interval is equal to or less than the time length;
determining a time interval to which a time-frequency domain resource corresponding to current time belongs as the time interval to which the UE belongs;
counting at least one of a historical uplink discard time or a historical uplink discard number within the time interval to which the UE belongs, the historical uplink discard time comprising at least one of an absolute time of historical uplink discard or a relative time of historical uplink discard; and
in response to at least one of the historical uplink discard time being less than or equal to the transmission time of the maximum allowable discard, or the historical uplink discard number being less than or equal to the transmission number of the maximum allowable discard, determining that uplink discard is allowed to be performed, or else, determining that uplink discard is not allowed to be performed.

7. The method of claim 5 or 6, wherein the method further comprises:
determining indication information based on at least one of a configuration of a network device or an agreement in a protocol, the indication information being used for indicating an uplink discard type to which the uplink transmission discard configuration is applicable and/or inapplicable.

8. The method of claim 7, wherein the indication information is used for indicating at least one of
the uplink transmission discard configuration is applicable to all uplink discard types;
the uplink transmission discard configuration is applicable to a first uplink discard type, the first uplink discard type comprising uplink discard that a UE spontaneously discards uplink transmission due to interference;
the uplink transmission discard configuration is applicable to a second uplink discard type, the second uplink discard type comprising uplink discard that a UE spontaneously discards uplink transmission due to a limited capacity of the UE;
the uplink transmission discard configuration is inapplicable to a third uplink discard type, the third uplink discard type comprising at least one of:
uplink discard due to that uplink processing time is less than a time threshold between current time and actual uplink transmission time;
uplink discard due to that an uplink sending delay is greater than a threshold value;
uplink discard due to that a reserved uplink resource has no sending demand; or
uplink discard due to an uplink transmission conflict.

9. The method of claim 7, wherein counting at least one of the historical uplink discard time and/or the historical uplink discard number comprises:
counting at least one of a historical discard time or a historical discard number of uplink discard to which the uplink transmission discard configuration is applicable, as at least one of the historical uplink discard time or the historical uplink discard number; or
counting at least one of a historical discard time or a historical discard number of uplink discard other than uplink discard to which the uplink transmission discard configuration is inapplicable, as at least one of the historical uplink discard time or the historical uplink discard number.

10. The method of claim 1, wherein a method for determining the uplink transmission discard configuration comprises at least one of:
obtaining the uplink transmission discard configuration sent by a network device; or
determining the uplink transmission discard configuration based on an agreement of a protocol.

11. The method of claim 1, wherein the method further comprises:
determining, based on a configuration of a network device and/or an agreement of a protocol, first frequency information of an applicable frequency of the uplink transmission discard configuration.

12. The method of claim 10, wherein the first frequency information comprises at least one of:
all service frequencies configured by the UE;
one or more service frequencies activated to be used among all the service frequencies configured by the UE; or
second frequency information indicating a specified frequency;
wherein the second frequency information comprises at least one of
a cell type indication of the specified frequency;
a cell group indication of the specified frequency;
a cell identifier of the specified frequency;
a bandwidth part, BWP, identifier of the specified frequency;
a frequency point identifier of the specified frequency;
a bandwidth of the specified frequency;
starting frequency information of the specified frequency; or
ending frequency information of the specified frequency.

13. The method of claim 11, wherein the performing the uplink discard based on the uplink transmission discard configuration comprises:
in response to a frequency corresponding to current uplink transmission is the applicable frequency of the uplink transmission discard configuration, performing the uplink discard based on the uplink transmission discard configuration.

14. The method of claim 2, wherein the method further comprises:
in response to the time length comprising the relative time length, determining, based on at least one of a configuration of a network device or an agreement of a protocol, reference time information to which the relative time length is applicable; the reference time information being used for indicating reference time applicable to the relative time length;
wherein the reference time information comprises at least one of:
an Sub-Carrier Space, SCS, applicable to the relative time length;
a Cyclic Prefix, CP, type applicable to the relative time length;
a cell type indication applicable to the relative time length;
a cell group indication applicable to the relative time length;
a cell identifier applicable to the relative time length; or
a BWP identifier applicable to the relative time length.

15. The method of claim 14, wherein the performing the uplink discard based on the uplink transmission discard configuration comprises:
determining, based on the reference time information, whether a reference time corresponding to current uplink transmission is the same as the reference time applicable to the relative time length;
in response to the reference time corresponding to the current uplink transmission being the same as the reference time applicable to the relative time length, performing uplink discard based on the uplink transmission discard configuration in which the applicable reference time is the same as the reference time corresponding to the current uplink transmission; and
in response to the reference time corresponding to the current uplink transmission being different from the reference time applicable to the relative time length, not performing uplink discard, or performing a conversion operation on the uplink transmission discard configuration, and performing uplink discard based on the converted uplink transmission discard configuration.

16. The method of claim 15, wherein the conversion operation comprises at least one of
performing a first operation to convert the relative time length in the uplink transmission discard configuration into a relative time length applicable to the reference time corresponding to the current uplink transmission, the first operation comprising: converting the relative time length in the uplink transmission discard configuration into an absolute time length, and converting the converted absolute time length into a relative time length applicable to the reference time corresponding to the current uplink transmission;
performing a second operation to convert the relative time of the maximum allowable discard in the uplink transmission discard configuration into relative time of maximum allowable discard applicable to the reference time corresponding to the current uplink transmission, the second operation comprising: converting the relative time of the maximum allowable discard in the uplink transmission discard configuration into an absolute time length, and converting the converted absolute time length into the relative time of the maximum allowable discard applicable to the reference time corresponding to the current uplink transmission;
performing a first operation to convert the relative time length in the uplink transmission discard configuration into the relative time length applicable to the reference time corresponding to the current uplink transmission, and performing a second operation to convert the relative time of the maximum allowable discard in the uplink transmission discard configuration into the relative time of the maximum allowable discard applicable to the reference time corresponding to the current uplink transmission;
performing a third operation on the uplink transmission discard configuration to obtain a converted uplink transmission discard configuration, the third operation satisfying: a maximum allowable discard rate of the converted uplink transmission discard configuration is the same as the maximum allowable discard rate of the unconverted uplink transmission discard configuration;
performing a fourth operation on the uplink transmission discard configuration to obtain a converted uplink transmission discard configuration, the fourth operation satisfying: the maximum allowable discard rate of the converted uplink transmission discard configuration is an integral value closest to the maximum allowable discard rate of the unconverted uplink transmission discard configuration;
performing a fifth operation on the uplink transmission discard configuration to obtain a converted uplink transmission discard configuration, the fifth operation satisfying: the maximum allowable discard rate of the converted uplink transmission discard configuration is less than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration; or
performing a sixth operation on the uplink transmission discard configuration to obtain a converted uplink transmission discard configuration, the sixth operation satisfying: the maximum allowable discard rate of the converted uplink transmission discard configuration is greater than or equal to the maximum allowable discard rate of the unconverted uplink transmission discard configuration, and the maximum allowable discard rate of the converted uplink transmission discard configuration is an integral value closest to the maximum allowable discard rate of the unconverted uplink transmission discard configuration.

17. The method of claim 16, wherein the maximum allowable discard rate = transmission time of the maximum allowable discard / the time length; or
the maximum allowable discard rate = a transmission number of the maximum allowable discard / the time length; or
the maximum allowable discard rate = the transmission number of the maximum allowable discard / a total transmission number within the time length.

18. An uplink transmission method performed by a network device, the method comprising:
sending an uplink transmission discard configuration to a UE, the uplink transmission discard configuration comprising at least one of a time length or maximum allowable discard information corresponding to the time length; wherein the time length is used for determining a time interval to which the UE belongs, and the maximum allowable discard information is used for determining whether the UE is allowed to perform uplink discard within the time interval.

19. The method of claim 18, wherein the time length comprises at least one of
an absolute time length; or
a relative time length;
wherein the relative time length comprises at least one of
a number of system frames;
a number of subframes;
a number of slots; or
a number of symbols.

20. The method of claim 19, wherein the maximum allowable discard information comprises at least one of
a transmission time of maximum allowable discard; or
a transmission number of the maximum allowable discard.

21. The method of claim 20, wherein the transmission time of the maximum allowable discard comprises at least one of
an absolute time of the maximum allowable discard, a length of the absolute time of the maximum allowable discard being less than or equal to the absolute time length; and
a relative time of the maximum allowable discard, a length of the relative time of the maximum allowable discard being less than or equal to the relative time length;
wherein the relative time of the maximum allowable discard comprises at least one of
a number of system frames of the maximum allowable discard;
a number of subframes of the maximum allowable discard;
a number of slots of the maximum allowable discard; or
a number of symbols of the maximum allowable discard.

22. The method of claim 21, wherein the method further comprises:
configuring indication information to the UE, the indication information being used for indicating an uplink discard type to which the uplink transmission discard configuration is applicable or inapplicable.

23. The method of claim 22, wherein the indication information is used for indicating at least one of:
the uplink transmission discard configuration is applicable to all uplink discard types;
the uplink transmission discard configuration is applicable to a first uplink discard type, the first uplink discard type comprising uplink discard that a UE spontaneously discards uplink transmission due to interference;
the uplink transmission discard configuration is applicable to a second uplink discard type, the second uplink discard type comprising uplink discard that a UE spontaneously discards uplink transmission due to a limited capacity of the UE;
the uplink transmission discard configuration is inapplicable to a third uplink discard type, the third uplink discard type comprising at least one of:
uplink discard due to that uplink processing time is less than a time threshold between current time and actual uplink transmission time;
uplink discard due to that an uplink sending delay is greater than a threshold value;
uplink discard due to that a reserved uplink resource has no sending demand; or
uplink discard due to an uplink transmission conflict.

24. The method of claim 19, wherein the method further comprises:
configuring first frequency information of an applicable frequency of the uplink transmission discard configuration to the UE.

25. The method of claim 24, wherein the first frequency information comprises at least one of:
all service frequencies configured by the UE;
one or more service frequencies activated to be used among all the service frequencies configured by the UE; or
second frequency information indicating a specified frequency;
wherein the second frequency information comprises at least one of:
a cell type indication of the specified frequency;
a cell group indication of the specified frequency;
a cell identifier of the specified frequency;
a BWP identifier of the specified frequency;
a frequency point identifier of the specified frequency;
a bandwidth of the specified frequency;
starting frequency information of the specified frequency; or
ending frequency information of the specified frequency.

26. The method of claim 19, wherein the method further comprises:
in response to the time length comprising the relative time length, configuring reference time information to which the relative time length is applicable to the UE; the reference time information being used for indicating reference time applicable to the relative time length;
wherein the reference time information comprises at least one of:
a Sub-Carrier Space, SCS, of an applicable frequency of the relative time length;
a CP type of an applicable frequency of the relative time length;
a cell type indication of an applicable frequency of the relative time length;
a cell group indication of an applicable frequency of the relative time length;
a cell identifier of an applicable frequency of the relative time length; or
a BWP identifier of an applicable frequency of the relative time length.

27. An uplink transmission apparatus, comprising:
a determination module configured to determine an uplink transmission discard configuration, the uplink transmission discard configuration comprising at least one of a time length or maximum allowable discard information corresponding to the time length; wherein the time length is used for determining a time interval to which the UE belongs, and the maximum allowable discard information is used for determining whether the UE is allowed to perform uplink discard within the time interval; and
an uplink discard module configured to, in response to needing to perform uplink discard, perform uplink discard based on the uplink transmission discard configuration.

28. An uplink transmission apparatus, comprising:
a sending module configured to send an uplink transmission discard configuration to a UE, the uplink transmission discard configuration comprising at least one of a time length or maximum allowable discard information corresponding to the time length; wherein the time length is used for determining a time interval to which the UE belongs, and the maximum allowable discard information is used for determining whether the UE is allowed to perform uplink discard within the time interval.

29. A communication apparatus, comprising: a processor and a memory, wherein the memory stores a computer program, and the processor executes the computer program stored in the memory to cause the apparatus to perform the method of any one of claims 1 to 17.

30. A communication apparatus, comprising: a processor and a memory, wherein the memory stores a computer program, and the processor executes the computer program stored in the memory to cause the apparatus to perform the method of any one of claims 18 to 26.

31. A communication apparatus, comprising: a processor and an interface circuit, wherein
the interface circuit is configured to receive code instructions and transmit the code instructions to the processor; and
the processor is configured to run the code instructions so as to perform the method of any one of claims 1 to 17.

32. A communication apparatus, comprising: a processor and an interface circuit, wherein
the interface circuit is configured to receive code instructions and transmit the code instructions to the processor; and
the processor is configured to run the code instructions so as to perform the method of any one of claims 18 to 26.

33. A computer-readable storage medium configured to store instructions which, when executed, enable the method of any one of claims 1 to 17 to be implemented.

34. A computer-readable storage medium configured to store instructions which, when executed, enable the method of any one of claims 18 to 26 to be implemented.
